# EUROPEAN PATENT APPLICATION

(11) **EP 4 421 640 A2**
(43) Date of publication of application: **28.08.2024**
(21) Application number: 24151836.4
(22) Date of filing: 15.01.2024
(51) Int. Cl.: G06F 11/14

(54) **STORAGE DEVICE, OPERATION METHOD OF STORAGE DEVICE, AND OPERATION METHOD OF STORAGE CONTROLLER**

(30) Priority: 01.02.2023 KR 20230013596; 20.12.2023 US 202318391566
(71) Applicant: Samsung Electronics Co., Ltd., Suwon-si, Gyeonggi-do 16677 (KR)
(72) Inventor: LEE, Jiseok, Suwon-si 16677 (KR); HWANG, Sangwon, Suwon-si 16677 (KR); LEE, Hyunyoung, Suwon-si 16677 (KR)
(74) Representative: Marks & Clerk LLP

(57) **Abstract**

A storage device which includes a nonvolatile memory device that includes a memory circuit storing first device information and that operates based on the first device information, a storage controller that controls the nonvolatile memory device, and a buffer memory that stores map data managed by the storage controller and stores second device information being a backup of the first device information. The first device information includes information about an operation parameter and an operation frequency of the nonvolatile memory device. The storage controller further performs a recovery operation on the first device information stored in the memory circuit of the nonvolatile memory device, based on the second device information stored in the buffer memory.

## Description

### BACKGROUND

Embodiments of the present disclosure described herein relate to a semiconductor memory, and more particularly, relate to a storage device, an operation method of the storage device, and an operation method of a storage controller.

Semiconductor memories are classified as a volatile memory, which loses data stored therein when a power is turned off, such as a static random access memory (SRAM) or a dynamic random access memory (DRAM) and a nonvolatile memory (NVM), which retains data stored therein even when a power is turned off, such as a flash memory, a phase-change RAM (PRAM), a magnetic RAM (MRAM), a resistive RAM (RRAM), or a ferroelectric RAM (FRAM).

Flash memories are being widely used as a high-capacity storage medium. Flash memories operate based on various operation information or device information. In this case, the operation information or device information is stored in a memory circuit included in a flash memory. Nowadays, as the degree of integration of the flash memory is improved, the size of the memory circuit included in the flash memory is decreasing. As the size of the memory circuit is reduced, various errors occur in data stored in the memory circuit. Accordingly, there is desired a means for recovering an error of data stored in the memory circuit.

### SUMMARY

Embodiments of the present disclosure provide an operation method of a storage controller with improved reliability, a storage system, and an operation method of the storage system.

According to an embodiment, a storage device includes a nonvolatile memory device that includes a memory circuit storing first device information and that operates based on the first device information, a storage controller that controls the nonvolatile memory device, and a buffer memory that stores map data managed by the storage controller and stores second device information being a backup of the first device information. The first device information includes information about an operation parameter and an operation frequency of the nonvolatile memory device. The storage controller further performs a recovery operation on the first device information stored in the memory circuit of the nonvolatile memory device, based on the second device information stored in the buffer memory.

According to an embodiment, an operation method of a storage device which includes a storage controller, a nonvolatile memory device, and a buffer memory includes setting, by the nonvolatile memory device, first device information to a memory circuit included in the nonvolatile memory device, obtaining, by the storage controller, the first device information from the nonvolatile memory device and storing the first device information in the buffer memory as second device information, performing, by the storage controller, a recovery operation on the first device information stored in the memory circuit based on the second device information stored in the buffer memory, when a device failure occurs in the nonvolatile memory device, and retrying, by the nonvolatile memory device, a previous failed operation based on the recovered first device information, after the recovery operation of the first device information is completed. The first device information includes information about an operation parameter and an operation frequency of the nonvolatile memory device.

According to an embodiment, an operation method of a storage device which includes a storage controller, a nonvolatile memory device, and a buffer memory includes setting, by the nonvolatile memory device, first device information to a memory circuit included in the nonvolatile memory device, obtaining, by the storage controller, the first device information from the nonvolatile memory device and storing the first device information in the buffer memory as second device information, and performing, by the storage controller, a recovery operation on the first device information stored in the memory circuit based on the second device information stored in the buffer memory, when an operation count of the nonvolatile memory device reaches a threshold value. The first device information includes information about an operation parameter and an operation frequency of the nonvolatile memory device.

At least some of the above and other features of the invention are set out in the claims.

### BRIEF DESCRIPTION OF THE FIGURES

The above and other objects and features of the present disclosure will become apparent by describing in detail embodiments thereof with reference to the accompanying drawings.
FIG. 1 is a block diagram illustrating a storage device according to an embodiment of the present disclosure.
FIG. 2 is a block diagram illustrating a nonvolatile memory device of FIG. 1 according to example embodiments.
FIG. 3 is a flowchart illustrating an operation of a storage controller of FIG. 2 according to example embodiments.
FIG. 4 is a flowchart illustrating operation S100 of FIG. 3 according to example embodiments.
FIG. 5 is a flowchart illustrating operation S100 of FIG. 3 according to example embodiments.
FIG. 6 is a flowchart illustrating operation S200 (i.e., a recovery operation) of FIG. 3 according to example embodiments.
FIG. 7 is a flowchart illustrating operation S200 (i.e., a recovery operation) of FIG. 3 according to example embodiments.
FIG. 8 is a flowchart illustrating operation S200 (i.e., a recovery operation) of FIG. 3 according to example embodiments.
FIG. 9 is a flowchart illustrating operation S200 (i.e., a recovery operation) of FIG. 3 according to example embodiments.
FIG. 10 is a block diagram illustrating a storage device according to an embodiment of the present disclosure.
FIG. 11 is a flowchart illustrating an operation of a storage device of FIG. 10 according to example embodiments.
FIG. 12 is a flowchart illustrating an operation of a storage device of FIG. 10 according to example embodiments.
FIG. 13 is a block diagram illustrating a storage device according to an embodiment of the present disclosure.
FIG. 14 is a flowchart illustrating an operation of a storage device of FIG. 13 according to example embodiments.
FIG. 15 is a timing diagram for describing an operation of a storage device of FIG. 1 according to example embodiments.
FIG. 16 is a block diagram illustrating a nonvolatile memory device according to an embodiment of the present disclosure.
FIG. 17 is a block diagram illustrating a nonvolatile memory device according to an embodiment of the present disclosure.
FIG. 18 is a block diagram illustrating a storage device according to an embodiment of the present disclosure.
FIG. 19 is a block diagram illustrating an electronic device according to an embodiment of the present disclosure.
FIG. 20 is a block diagram illustrating a host-storage system according to an embodiment of the present disclosure.
FIG. 21 is a diagram illustrating a data center to which a memory device according to an embodiment of the present disclosure is applied.

### DETAILED DESCRIPTION

Below, embodiments of the present disclosure will be described in detail and clearly to such an extent that an ordinary one in the art easily carries out the present disclosure.

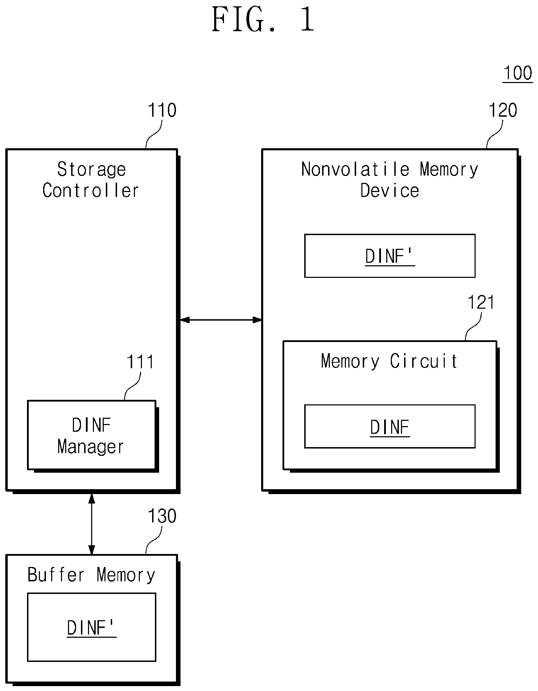

FIG. 1 is a block diagram illustrating a storage device according to an embodiment of the present disclosure. Referring to FIG. 1, a storage device 100 may include a storage controller 110, a nonvolatile memory device 120, and a buffer memory 130. In an embodiment, the storage device 100 may be a high-capacity storage medium such as a solid state drive (SSD). The storage device 100 may be included in one of information processing devices, which are configured to process a variety of information and to store the processed information, such as a personal computer (PC), a laptop, a server, a workstation, a smartphone, a tablet PC, a digital camera, and a black box. However, the present disclosure is not limited thereto. For example, the storage device 100 may be implemented in various forms and may be included in various devices or various systems.

The storage controller 110 may be configured to control the nonvolatile memory device 120. For example, under control of an external host (not shown), the storage controller 110 may store read data in the nonvolatile memory device 120 or may read data stored in the nonvolatile memory device 120. In an embodiment, regardless of the control of the external host, the storage controller 110 may perform various maintenance operations for improving the performance or reliability of the nonvolatile memory device 120.

In an embodiment, the storage controller 110 may be configured to communicate with the external host based on a given host interface. The given host interface may include at least one of various host interfaces such as a universal serial bus (USB) interface, a multimedia card (MMC) interface, a peripheral component interconnection (PCI) interface, a PCI-express (PCI-e) interface, an advanced technology attachment (ATA) interface, a serial-ATA (SATA) interface, a parallel-ATA (PATA) interface, a small computer small interface (SCSI) interface, an enhanced small disk interface (ESDI), an integrated drive electronics (IDE) interface, a mobile industry processor interface (MIPI), a nonvolatile memory-express (NVM-e) interface, and a compute express link (CXL) interface.

In an embodiment, the storage controller 110 may be configured to communicate with the nonvolatile memory device 120 through a given memory interface. The given memory interface may include at least one of various flash memory interfaces such as a toggle NAND interface and an open NAND flash interface (ONFI).

In an embodiment, the storage controller 110 may be configured to communicate with the buffer memory 130 based a given memory interface. The given memory interface may include at least one of high-speed interfaces such as a double data rate (DDR) interface, a low power DDR (LPDDR) interface, and a graphics DDR (GDDR) interface.

The nonvolatile memory device 120 may operate under control of the storage controller 110. For example, under control of the storage controller 110, the nonvolatile memory device 120 may store data or may output the stored data. In an embodiment, the nonvolatile memory device 120 may be a NAND flash memory, but the present disclosure is not limited thereto.

The buffer memory 130 may be configured to store a variety of information necessary for the storage device 100 to operate. For example, the buffer memory 130 may be configured to temporarily buffer data to be stored in the nonvolatile memory device 120 or data read from the nonvolatile memory device 120. Alternatively, the buffer memory 130 may be configured to store meta data, which are used by the storage controller 110, such as map data. For example, the map data may represent a mapping relation between a logical address of the storage controller 110 (or the external host) and a physical address of the nonvolatile memory device 120. Alternatively, the buffer memory 130 may be configured to store various data that are used or managed by the storage controller 110. In one example, the buffer memory may be configured to store map data managed by the storage controller and to store second device information being a backup of the first device information.

In an embodiment, the nonvolatile memory device 120 may include a memory circuit 121. The memory circuit 121 may be configured to store device information DINF (for example, first device information). The nonvolatile memory device 120 may perform various operations (e.g., a read operation, a program operation, and an erase operation) based on the device information DINF stored in the memory circuit 121. In an embodiment, the device information DINF may include a variety of information necessary for the nonvolatile memory device 120 to operate. For example, the device information DINF may include information about various operation parameters of the nonvolatile memory device 120, such as a read voltage level, a program voltage level, and an erase voltage level. Alternatively, the device information DINF may include a variety of information of the nonvolatile memory device 120, such as an operation characteristic, a capacity, and an operation frequency. Alternatively, the device information DINF may include a variety of information of the nonvolatile memory device 120, such as a vendor identifier, a device model, and an operation characteristic supported by a device. However, the present disclosure is not limited thereto. For example, the device information DINF may include a variety of other information necessary for the nonvolatile memory device 120 to operate. In one example, first device information may include information about an operation parameter and an operation frequency of the nonvolatile memory device.

In an embodiment, the memory circuit 121 may be implemented through an E-fuse (electronic fuse) manner to store the device information DINF. For example, when the nonvolatile memory device 120 is powered on, through the E-fuse manner, the device information DINF may be stored in or loaded to the memory circuit 121.

In an embodiment, the memory circuit 121 may include a latch circuit (in one example, a plurality of latch circuits) configured to store data. An error may occur in latch circuits included in the memory circuit 121 due to various external factors. In this case, an error may be included in the device information DINF stored in the memory circuit 121, thereby making a normal operation of the nonvolatile memory device 120 impossible. That is, when an error occurs in the device information DINF of the memory circuit 121, there is required a means for recovering the erroneous device information DINF.

The nonvolatile memory device 120 may store device information DINF' that is the same as the device information DINF. In an embodiment, except for the device information DINF stored in the memory circuit 121, the device information DINF' may be stored in a separate storage circuit or a memory cell array. For example, the device information DINF' may be stored in the memory cell array when the nonvolatile memory device 120 is powered on. Alternatively, the device information DINF' may be stored in the memory cell array in the process of manufacturing the nonvolatile memory device 120.

The storage controller 110 may include a device information manager 111. The device information manager 111 may back the device information DINF' stored in the memory cell array of the nonvolatile memory device 120 up to the buffer memory 130. The device information DINF' stored in the memory cell array of the nonvolatile memory device 120 may be the backup of the device information DINF (e.g. first device information) stored in the memory circuit 121, and the buffer memory 130 may be configured to store the device information DINF' (e.g. second device information) being the backup of the device information DINF stored in the memory circuit 121. The device information manager 111 may perform a recovery operation on the device information DINF of the memory circuit 121 based on the device information DINF' stored in the buffer memory 130. In this case, even though an error occurs in the device information DINF of the memory circuit 121 due to various factors, the device information DINF may be normally recovered by the recovery operation of the device information manager 111. Accordingly, the nonvolatile memory device 120 may operate normally. In one example, the storage controller may be further configured to perform a recovery operation on the first device information stored in the memory circuit of the nonvolatile memory device, based on the second device information stored in the buffer memory. In one example, the storage controller may be configured to perform the recovery operation based on a set feature command, a vendor command, or a combination of at least one operation command. In one example, the storage controller may be configured to perform the recovery operation on the first device information stored in the memory circuit whenever an operation count of the nonvolatile memory device reaches a threshold value.

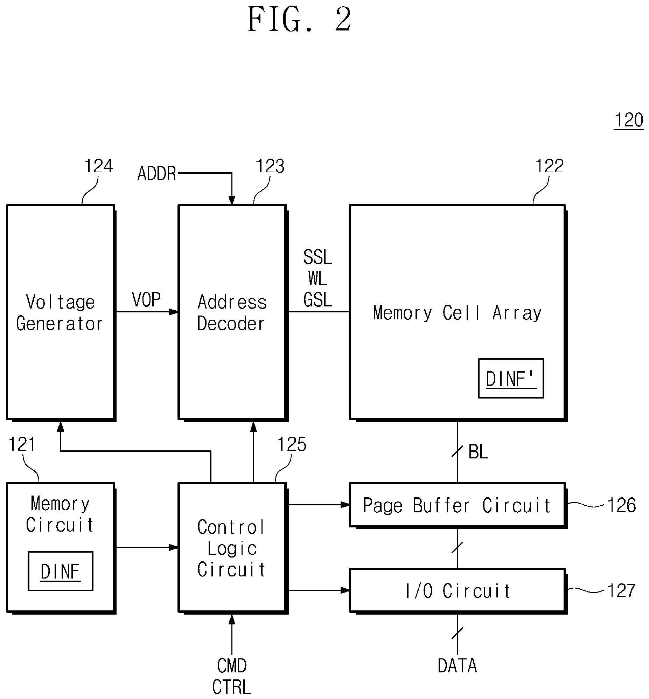

FIG. 2 is a block diagram illustrating a nonvolatile memory device of FIG. 1 according to example embodiments. Referring to FIGS. 1 and 2, the nonvolatile memory device 120 may include the memory circuit 121, a memory cell array 122, an address decoder 123, a voltage generator 124, a control logic circuit 125, a page buffer circuit 126, and an input/output circuit 127.

The memory circuit 121 may be configured to store the device information DINF. For example, the memory circuit 121 may include a plurality of latch circuits. The plurality of latch circuits may store the device information DINF based on the E-fuse manner. However, the present disclosure is not limited thereto. For example, the memory circuit 121 may include various memory elements (e.g., an SRAM element, a DRAM element, and an MRAM element) configured to store the device information DINF.

The memory cell array 122 may include a plurality of memory blocks. Each of the plurality of memory blocks may include a plurality of cell strings. Each of the plurality of cell strings may include a plurality of cell transistors connected in series between a bit line BL and a common source line (CSL). The plurality of cell transistors may be connected to string selection lines SSL, word lines WL, and ground selection lines GSL. In an embodiment, each of the plurality of memory blocks may be a three-dimensional memory structure formed in a direction perpendicular to a substrate.

In an embodiment, the memory cell array 122 may be configured to store the device information DINF'. The device information DINF' may be stored in a given region or a given memory block of the memory cell array 122.

In an embodiment, the memory circuit 121 may be a hardware component that is physically separated from the memory cell array 122. For example, as described above, the memory cell array 122 may include memory cells that operate through the control of the word lines WL and the bit lines BL. In contrast, the memory circuit 121 may include circuit components that operate in response to separate control signals different from those of the word lines WL and the bit lines BL connected to the memory cell array 122.

The address decoder 123 may receive an address ADDR from the storage controller 110 and may decode the received address ADDR. The address decoder 123 may be configured to drive the string selection lines SSL, the word lines WL, and the ground selection lines GSL based on a result of decoding the address ADDR.

The voltage generator 124 may generate various operation voltages VOP necessary for the nonvolatile memory device 120 to operate. For example, the voltage generator 124 may generate a plurality of read voltages, which are used in the read operation of the nonvolatile memory device 120, as the operation voltages VOP and may provide the plurality of read voltages to the address decoder 123. In an embodiment, the operation voltages VOP are not limited to the plurality of read voltages and may include various operation voltages such as a plurality of program voltages, a plurality of pass voltages, a plurality of verify voltages, a plurality of non-selection read voltages, a plurality of erase voltages, and a plurality of erase verify voltages.

The control logic circuit 125 may receive a command CMD and a control signal CTRL from the storage controller 110 and may control an overall operation of the nonvolatile memory device 120 in response to the received signals. In an embodiment, the control logic circuit 125 may control the operation of the nonvolatile memory device 120 based on the device information DINF stored in the memory circuit 121. For example, based on the device information DINF, the control logic circuit 125 may adjust a level of a program voltage, adjust a level of a read voltage, adjust the number of program loops, or adjust an operation characteristic of each component. In one example, the control logic circuit may be configured to control the address decoder, the page buffer circuit, the input/output circuit, and the voltage generator based on the first device information stored in the memory circuit.

The page buffer circuit 126 may be connected to the memory cell array 122 through the bit lines BL. The page buffer circuit 126 may read data stored in the memory cell array 122 by sensing voltage changes of the bit lines BL. The page buffer circuit 126 may store data in the memory cell array 122 by controlling voltages of the bit lines BL. In an embodiment, the page buffer circuit 126 may include a plurality of latch circuits. The plurality of latch circuits may temporarily store data to be programmed in the memory cell array 122 or data read from the memory cell array 122. In an embodiment, the memory circuit 121 configured to store the device information DINF may include a plurality of latch circuits. In this case, the plurality of latch circuits included in the memory circuit 121 may be hardware components separated from the plurality of latch circuits included in the page buffer circuit 126.

The input/output circuit 127 may receive data "DATA" from the storage controller 110 and may provide the received data "DATA" to the page buffer circuit 126. The input/output circuit 127 may receive the data "DATA" from the page buffer circuit 126 and may provide the received data "DATA" to the storage controller 110.

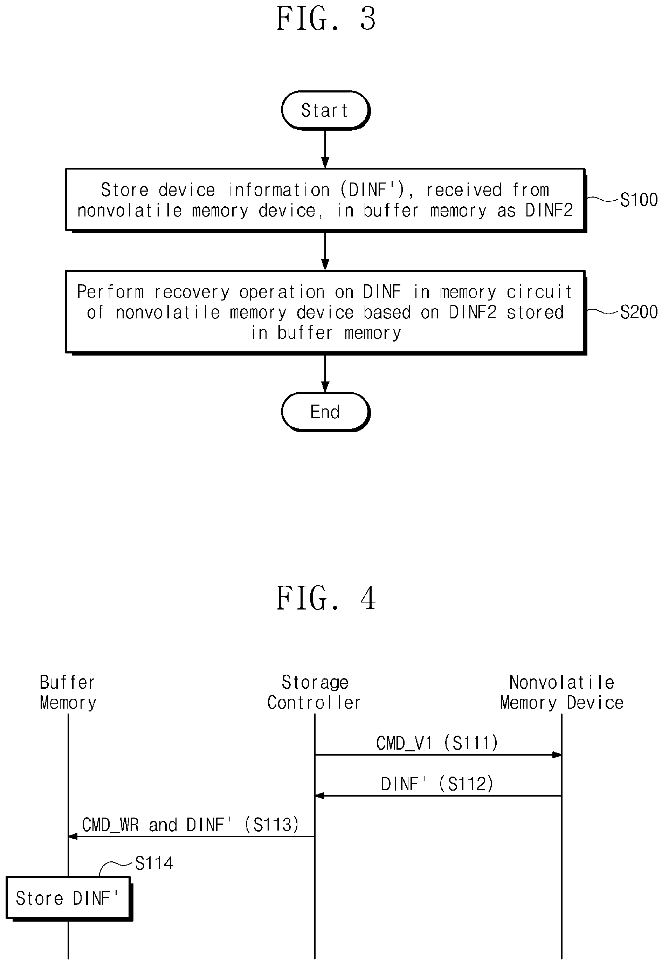

FIG. 3 is a flowchart illustrating an operation of the storage controller of FIG. 2 according to example embodiments. Referring to FIGS. 1 to 3, in operation S100, the storage controller 110 may store the device information DINF' received from the nonvolatile memory device 120 in the buffer memory 130. For example, the storage controller 110 may receive the device information DINF' from the nonvolatile memory device 120. The storage controller 110 may store the device information DINF' in the buffer memory 130. The device information DINF' stored in the buffer memory 130 may be referred to as second device information DINF2.

In an embodiment, operation S100 may correspond to a backup operation for the device information DINF of the nonvolatile memory device 120. For example, the backup operation for the device information DINF of the nonvolatile memory device 120 may refer to an operation of storing the device information DINF of the nonvolatile memory device 120 in a separate memory (e.g., the buffer memory 130) different from the nonvolatile memory device 120. In an embodiment, operation S100 may be performed in the initialization operation of the storage device 100. Alternatively, operation S100 may be performed periodically or randomly during the operation of the storage device 100.

In operation S200, the storage controller 110 may perform the recovery operation on the device information DINF stored in the memory circuit 121 of the nonvolatile memory device 120 based on the second device information DINF2 stored in the buffer memory 130. For example, the storage controller 110 may control the nonvolatile memory device 120 such that the second device information DINF2 stored in the buffer memory 130 is loaded to the memory circuit 121 of the nonvolatile memory device 120. In this case, even though an error occurs in the device information DINF stored in the memory circuit 121 of the nonvolatile memory device 120, because new device information (i.e., the second device information DINF2 stored in the buffer memory 130) is loaded, the device information DINF of the memory circuit 121 may maintain a normal state.

In an embodiment, operation S200 may correspond to the recovery operation for the device information DINF of the nonvolatile memory device 120. In an embodiment, the details of operation S200 may be variously implemented depending on a way to implement, which will be described in detail with reference to the following drawings.

FIG. 4 is a flowchart illustrating operation S100 of FIG. 3 according to example embodiments. Referring to FIGS. 1 to 4, operation S100 may include operation S111 to operation S114.

In operation S111, the storage controller 110 may transmit a first command CMD_V1 to the nonvolatile memory device 120. In an embodiment, the first command CMD_V1 may be a command for reading the device information DINF' stored in the nonvolatile memory device 120. The first command CMD_V1 may be a vendor command set to support a specific operation or a combination of various other commands. For example, the first command CMD_V1 may be a set feature command "SET FEATURE". Alternatively, the first command CMD_V1 may be a read command for reading the device information DINF' stored in the memory cell array 122 of the nonvolatile memory device 120. Alternatively, the first command CMD_V1 may be a vendor command configured to support a specific operation. However, the present disclosure is not limited thereto. For example, the first command CMD_V1 may be one of various types of commands for reading the device information DINF' from the nonvolatile memory device 120.

In operation S112, the nonvolatile memory device 120 may transmit the device information DINF' to the storage controller 110 in response to the first command CMD_V1. In an embodiment, the nonvolatile memory device 120 may transmit the device information DINF' stored in the memory cell array 122 to the storage controller 110 in response to the first command CMD_V1. Alternatively, the nonvolatile memory device 120 may transmit the device information DINF stored in the memory circuit 121 as the device information DINF' to the storage controller 110 in response to the first command CMD_V1.

In operation S113, the storage controller 110 may transmit a write command CMD_WR and the device information DINF' to the buffer memory 130. In operation S114, the buffer memory 130 may store the device information DINF' in response to the write command CMD_WR. In an embodiment, the device information DINF' may be stored in a given region of the buffer memory 130.

As described above, under control of the storage controller 110, the device information DINF of the nonvolatile memory device 120 may be stored in or backed up to the buffer memory 130. In an embodiment, operation S111 and operation S112 of FIG. 4 may be performed during the initialization operation of the storage device 100. In an embodiment, operation S111 and operation S112 of FIG. 4 may be performed during a map table loading period of the storage device 100. However, the present disclosure is not limited thereto. For example, the backup operation for the device information DINF may be performed periodically or randomly during the operation of the storage device 100.

In an embodiment, the storage controller 110 may read the device information DINF' stored in the memory cell array 122 of the nonvolatile memory device 120 by using the read command and may store the read device information DINF' in the buffer memory 130. In this case, the storage controller 110 may read the device information DINF' stored in the memory cell array 122 of the nonvolatile memory device 120 by using a normal read command and an address indicating a specific region where the device information DINF' is stored.

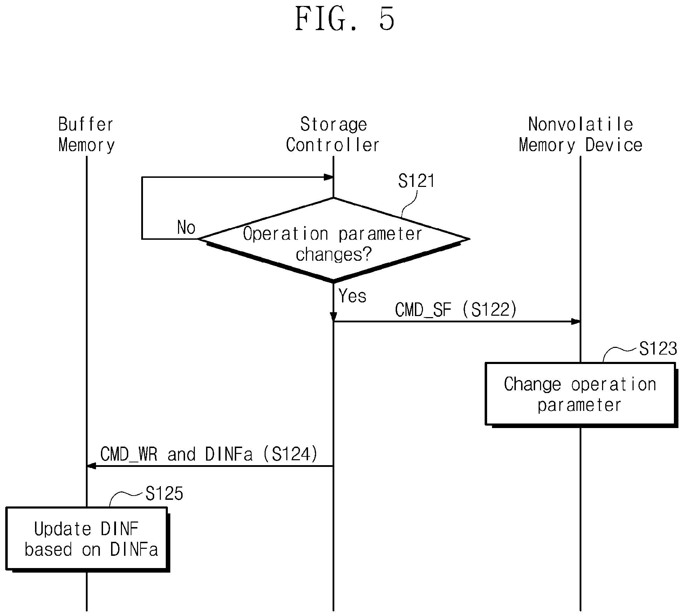

FIG. 5 is a flowchart illustrating operation S100 of FIG. 3 according to example embodiments. Referring to. 1 to 3 and 5, operation S100 may further include operation S121 to operation S125. In an embodiment, the storage controller 110 may update or change the device information DINF of the nonvolatile memory device 120.

In operation S121, the storage controller 110 may determine whether there is a need to change operation parameters of the nonvolatile memory device 120. For example, while the storage device 100 operates, when the nonvolatile memory device 120 does not operate normally, due to various factors (a temperature change, a lifetime decrease, a change of an operation state, etc.), the storage controller 110 may change the operation parameters of the nonvolatile memory device 120 such that the nonvolatile memory device 120 performs a normal operation.

When there is no need to change the operation parameters of the nonvolatile memory device 120, the storage controller 110 may not perform a separate operation. That is, the storage controller 110 may perform a normal operation.

When there is a need to change the operation parameters of the nonvolatile memory device 120, the storage controller 110 may transmit a command CMD_SF to the nonvolatile memory device 120 (operation S122). In an embodiment, the command CMD_SF may be the set feature command "SET FEATURE" for changing or updating the operation parameters of the nonvolatile memory device 120 or a vendor command defined by a manufacturer.

In operation S123, the nonvolatile memory device 120 changes the operation parameters (parameter) in response to the command CMD_SF. In an embodiment, at least some of the changed operation parameters may be included in the device information DINF of the nonvolatile memory device 120. For example, when the operation parameters are changed, at least a portion of the device information DINF of the nonvolatile memory device 120 may be changed and stored the changed device information as DINFa in the nonvolatile memory device 120.

In operation S124, the storage controller 110 may transmit the write command CMD_WR and changed device information DINF a to the buffer memory 130. Although not shown, the operations S111 and S112 of FIG. 4 may be performed by the storage controller 110 for reading the changed device information DINFa stored in the nonvolatile memory device 120 before the operation S124 is performed.

In operation S125, the buffer memory 130 may update the stored device information DINF based on the changed device information DINFa in response to the write command CMD_WR.

As described above, during the operation of the storage device 100, due to various factors, at least a portion of the device information DINF of the nonvolatile memory device 120 may be changed or updated. In this case, the storage controller 110 may change the operation parameters of the nonvolatile memory device 120 and may update the device information DINF of the buffer memory 130 based on the device information DINFa updated by the change of the operation parameters. In this case, the buffer memory 130 may maintain the device information DINF of the latest version.

As described with reference to FIGS. 4 and 5, the storage controller 110 may back and manage the device information DINF of the nonvolatile memory device 120 up to a separate memory (e.g., the buffer memory 130). In an embodiment, the operations described with reference to FIGS. 4 and 5 may be performed in the initialization operation of the storage device 100 or may be performed periodically or randomly during the operation of the storage device 100.

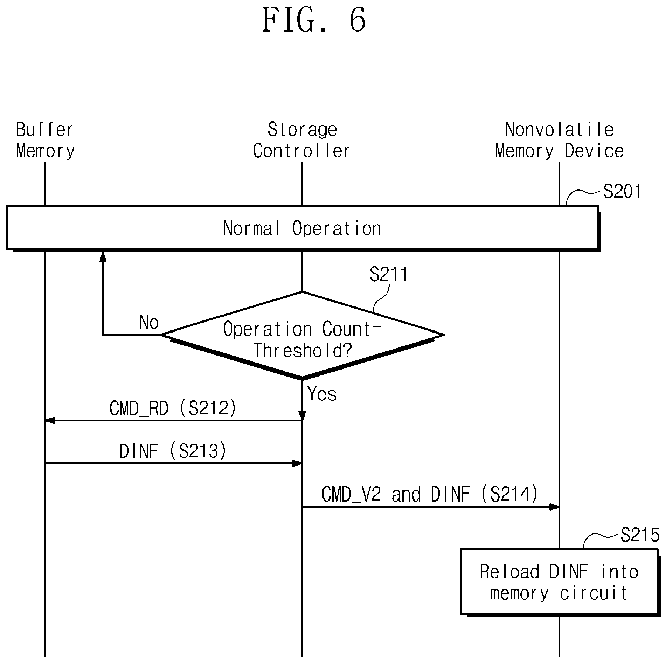

FIG. 6 is a flowchart illustrating operation S200 (i.e., a recovery operation) of FIG. 3 according to example embodiments. Below, for convenience of description, it is assumed that the buffer memory 130 stores the device information DINF. That is, by performing the operations described with reference to FIGS. 4 and 5, the storage controller 110 may back and manage the device information DINF of the nonvolatile memory device 120 up to the buffer memory 130.

Referring to FIGS. 1, 2, 3, and 6, in operation S201, the storage controller 110, the nonvolatile memory device 120, and the buffer memory 130 may perform normal operations. For example, the storage controller 110 may store data in the nonvolatile memory device 120 or may read data stored in the nonvolatile memory device 120. The storage controller 110 may update or manage map data stored in the buffer memory 130. Alternatively, the storage controller 110 may perform various other maintenance operations.

In operation S211, the storage controller 110 may determine whether an operation count of the nonvolatile memory device 120 reaches a threshold value (for example, a predetermined threshold). For example, the storage controller 110 may manage the operation count of the nonvolatile memory device 120. The operation count may include at least one of various parameters of the nonvolatile memory device 120, such as a read count, a program count, and the number of P/E cycles. As the operation count of the nonvolatile memory device 120 increases, the reliability of the memory circuit 121 of the nonvolatile memory device 120 may decrease. That is, the probability that an error occurs in the device information DINF included in the memory circuit 121 may become higher.

When the operation count does not reach the threshold value, the storage controller 110, the nonvolatile memory device 120, and the buffer memory 130 may continuously perform the normal operation.

When the operation count reaches the threshold value, the storage controller 110 may perform the recovery operation on the device information DINF of the nonvolatile memory device 120. For example, in operation S212, the storage controller 110 may transmit a read command CMD_RD to the buffer memory 130. The read command CMD_RD may be a command for reading the device information DINF stored in the buffer memory 130. In operation S213, the buffer memory 130 may transmit the stored device information DINF (i.e., previously backed-up device information) to the storage controller 110 in response to the read command CMD_RD.

In operation S214, the storage controller 110 may transmit a second command CMD_V2 and the device information DINF to the nonvolatile memory device 120. In an embodiment, in operation S214, the device information DINF transmitted to the nonvolatile memory device 120 may be the device information DINF that is read from the buffer memory 130 and does not include an error.

In an embodiment, the second command CMD_V2 may be a command for setting the device information DINF to the memory circuit 121 of the nonvolatile memory device 120. In an embodiment, the second command CMD_V2 may be a command different from a normal program command for programming data in the memory cell array 122 of the nonvolatile memory device 120. In an embodiment, the second command CMD_V2 may be the set feature command "SET FEATURE". In an embodiment, the second command CMD_V2 may be a vendor command or a combination of various other operation commands.

In operation S215, the nonvolatile memory device 120 may reload the device information DINF to the memory circuit 121 in response to the second command CMD_V2. For example, the nonvolatile memory device 120 may again configure the memory circuit 121 based on the second command CMD_V2 such that the device information DINF is stored in the memory circuit 121. In this case, because the device information DINF stored in the memory circuit 121 is again configured based on the device information DINF stored in the buffer memory 130, the device information DINF again stored in the memory circuit 121 may not include an error. Accordingly, the reliability of operation of the nonvolatile memory device 120 is improved.

As described above, the storage controller 110 may reload the device information DINF of the memory circuit 121 based on the device information DINF stored in the buffer memory 130, periodically depending on the operation count of the nonvolatile memory device 120. Accordingly, the reliability of the device information DINF of the memory circuit 121 may be improved. In an embodiment, the threshold value may be a value that is in advance defined depending on an operation characteristic of the nonvolatile memory device 120. Alternatively, the threshold value may be a random number that is determined depending on an operation characteristic of the nonvolatile memory device 120. In one example, the storage controller may be configured to perform the recovery operation on the first device information stored in the memory circuit without a device reset or power-off of the nonvolatile memory device.

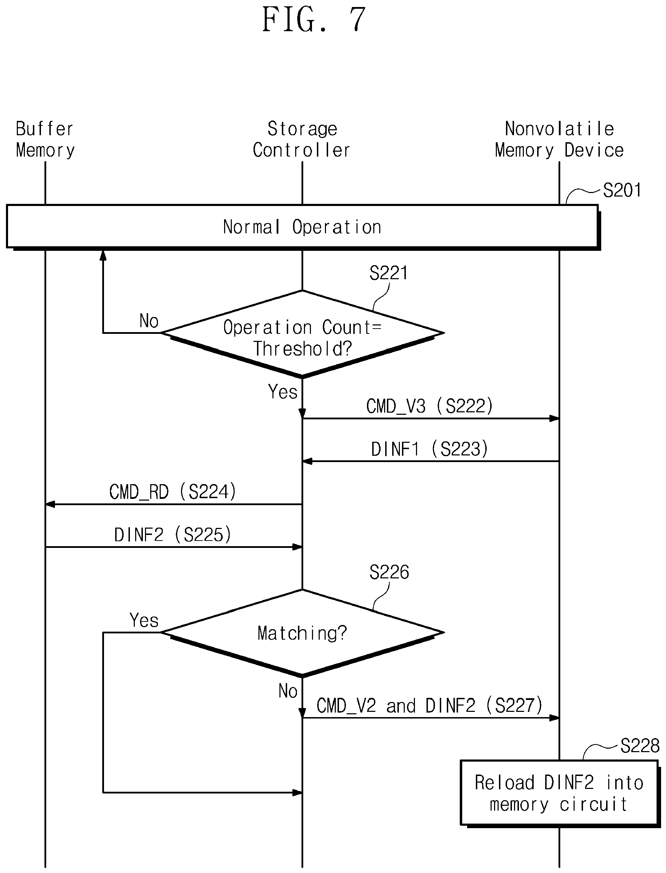

FIG. 7 is a flowchart illustrating operation S200 (i.e., a recovery operation) of FIG. 3 according to example embodiments. Referring to FIGS. 1, 2, 3, and 7, in operation S201, the storage controller 110, the nonvolatile memory device 120, and the buffer memory 130 may perform normal operations. In operation S221, the storage controller 110 may determine whether an operation count of the nonvolatile memory device 120 reaches a threshold value. The operation S201 and the operation S221 of FIG. 7 are similar to the operation S201 and the operation S211 of FIG. 6, and thus, additional description will be omitted to avoid redundancy.

When the operation count reaches the threshold value, in operation S222, the storage controller 110 may send a third command CMD_V3 to the nonvolatile memory device 120. In an embodiment, the third command CMD_V3 may be a command for reading the device information DINF stored in the memory circuit 121 of the nonvolatile memory device 120. In an embodiment, the third command CMD_V3 may be a "GET FEATURE" command. Alternatively, the third command CMD_V3 may include a vendor command or a combination of various other operation commands.

In operation S223, the nonvolatile memory device 120 may provide the device information DINF to the storage controller 110 in response to the third command CMD_V3. In an embodiment, the nonvolatile memory device 120 may provide the device information DINF stored in the memory circuit 121 to the storage controller 110 in response to the third command CMD_V3. For convenience of description, the device information DINF provided from the memory circuit 121 is referred to as "first device information DINF1". For example, the nonvolatile memory device 120 may provide the first device information DINF1 stored in the memory circuit 121 to the storage controller 110 in response to the third command CMD_V3.

In operation S224, the storage controller 110 may transmit the read command CMD_RD to the buffer memory 130. In operation S225, the buffer memory 130 may provide the device information DINF to the storage controller 110 in response to the read command CMD_RD. For convenience of description, the device information DINF provided from the buffer memory 130 is referred to as "second device information DINF2". For example, the buffer memory 130 may provide the second device information DINF2 to the storage controller 110 in response to the read command CMD_RD.

In operation S226, the storage controller 110 may determine that the first device information DINF1 and the second device information DINF2 are matched (matching). For example, as described above, the second device information DINF2 (i.e., device information provided from the buffer memory 130) may not include an error. In this case, when the first device information DINF1 (i.e., device information stored in the memory circuit 121) does not include an error, the first device information DINF 1 and the second device information DINF2 may be matched (for example, may be identical). In contrast, when the first device information DINF1 (i.e., device information stored in the memory circuit 121) includes an error, the first device information DINF 1 and the second device information DINF2 may not be matched.

When the first device information DINF1 and the second device information DINF2 are matched, the storage controller 110 may perform any other normal operation without performing a separate operation.

When the first device information DINF1 and the second device information DINF2 are not matched, in operation S227, the storage controller 110 may transmit the second command CMD_V2 and the second device information DINF2 to the nonvolatile memory device 120. In operation S228, the nonvolatile memory device 120 may reload the second device information DINF2 to the memory circuit 121. The operation S227 and the operation S228 of FIG. 7 are similar to the operation S214 and the operation S215 of FIG. 6, and thus, additional description will be omitted to avoid redundancy.

As described above, the storage controller 110 may perform the following operations periodically depending on the operation count of the nonvolatile memory device 120: 1) comparing the first device information DINF1 of the memory circuit 121 and the second device information DINF2 of the buffer memory 130 and 2) reloading the second device information DINF2 stored in the buffer memory 130 to the memory circuit 121 depending on a comparison result. Accordingly, the reliability of the device information DINF of the memory circuit 121 may be improved. In an embodiment, the threshold value may be a value that is in advance defined depending on an operation characteristic of the nonvolatile memory device 120. Alternatively, the threshold value may be a random number that is determined depending on an operation characteristic of the nonvolatile memory device 120.

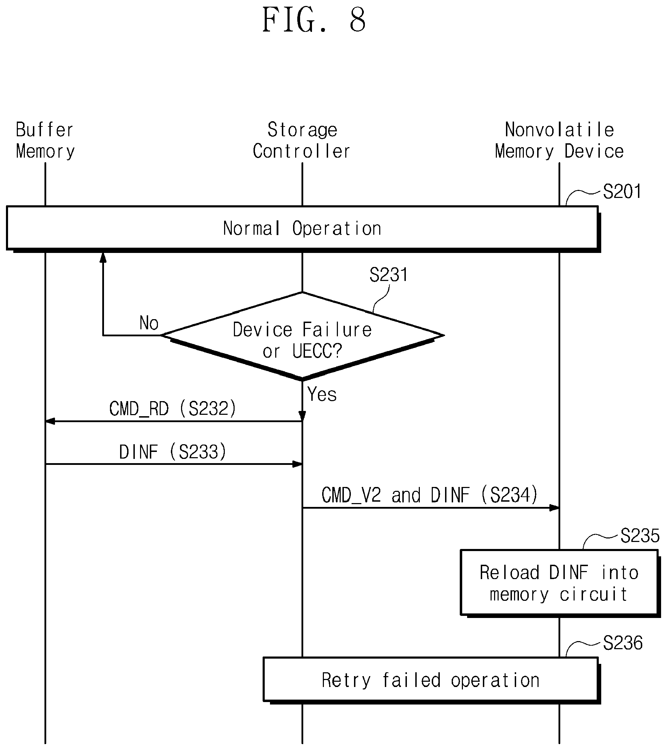

FIG. 8 is a flowchart illustrating operation S200 (i.e., a recovery operation) of FIG. 3 according to example embodiments. Referring to FIGS. 1, 2, 3, and 8, in operation S201, the storage controller 110, the nonvolatile memory device 120, and the buffer memory 130 may perform normal operations. The operation S201 of FIG. 8 is similar to the operation S201 of FIG. 6, and thus, additional description will be omitted to avoid redundancy.

In operation S231, the storage controller 110 may determine whether a device failure or an uncorrectable error correction code (EUCC) occurs in the nonvolatile memory device 120. For example, during the operation of the storage device 100, the device failure may occur in the nonvolatile memory device 120. For example, when a read operation, a program operation, or an erase operation of the nonvolatile memory device 120 fails, the device failure may occur in the nonvolatile memory device 120. Alternatively, the UECC may occur in data read from the nonvolatile memory device 120.

When the device failure or the UECC does not occur in the nonvolatile memory device 120, the storage controller 110 may perform the normal operation.

When the device failure or the UECC occurs in the nonvolatile memory device 120, the storage controller 110 may perform the recovery operation on the device information DINF stored in the memory circuit 121 of the nonvolatile memory device 120. For example, in operation S232, the storage controller 110 may transmit the read command CMD_RD to the buffer memory 130. In operation S233, the buffer memory 130 may transmit the stored device information DINF to the storage controller 110 in response to the read command CMD_RD. In operation S234, the storage controller 110 may transmit the second command CMD_V2 and the device information DINF to the nonvolatile memory device 120. In operation S235, the nonvolatile memory device 120 may reload the received device information DINF from the buffer memory 130 to the memory circuit 121. The operation S232 to the operation S235 of FIG. 8 are similar to the operation S212 to the operation S215 of FIG. 6, and thus, additional description will be omitted to avoid redundancy.

After the device information DINF from the buffer memory 130 is reloaded to the memory circuit 121 of the nonvolatile memory device 120, in operation S236, the storage controller 110 and the nonvolatile memory device 120 may retry an operation the same as the previous failed operation. For example, during the program operation of the nonvolatile memory device 120, a program fail may occur due to an error of the device information DINF. In this case, through the above operations, the storage controller 110 may reload the device information DINF of the buffer memory 130 to the memory circuit 121 of the nonvolatile memory device 120. Afterwards, the nonvolatile memory device 120 may retry the program operation based on the reloaded device information DINF. In this case, the program operation may succeed. For example, when the device failure or the UECC occurs in the nonvolatile memory device 120, the storage controller 110 may recover the device information DINF stored in the memory circuit 121 of the nonvolatile memory device 120 and may retry the failed operation. In this case, the operation of the previous failed operation may be performed normally, and thus, the reliability of the storage device 100 or the nonvolatile memory device 120 may be improved.

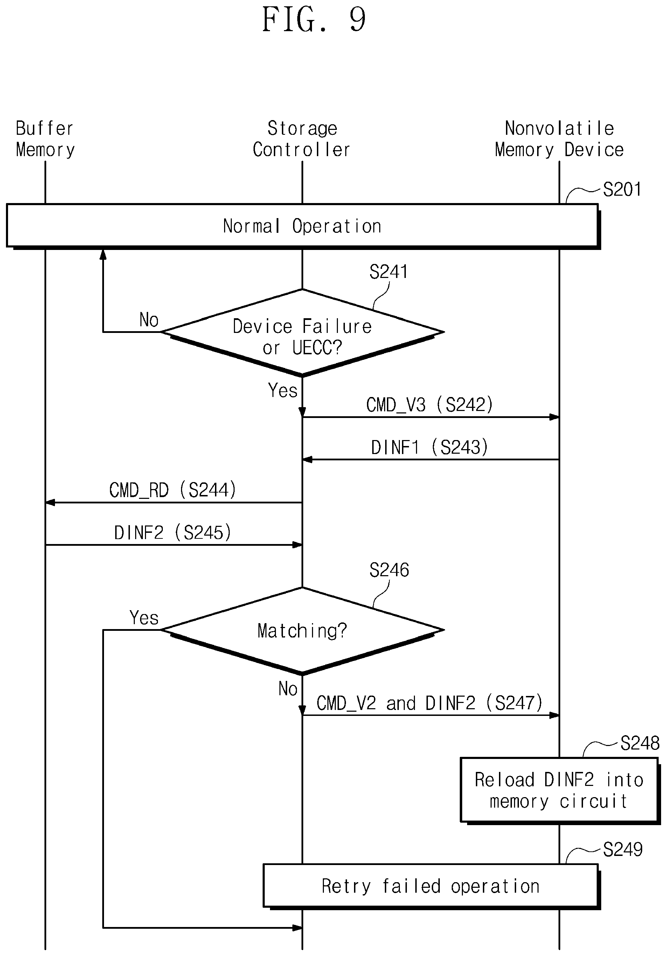

FIG. 9 is a flowchart illustrating operation S200 (i.e., a recovery operation) of FIG. 3 according to example embodiments. Referring to FIGS. 1, 2, 3, and 9, in operation S201, the storage controller 110, the nonvolatile memory device 120, and the buffer memory 130 may perform normal operations. In operation S241, the storage controller 110 may determine a device failure or an EUCC of the nonvolatile memory device 120. The operation S201 and the operation S241 of FIG. 9 are similar to the operation S201 and the operation S231 of FIG. 8, and thus, additional description will be omitted to avoid redundancy.

When the device failure or the EUCC occurs in the nonvolatile memory device 120, in operation S242, the storage controller 110 transmit the third command CMD_V3 to the nonvolatile memory device 120. In operation S243, the nonvolatile memory device 120 may transmit the first device information DINF1 (i.e., device information stored in the memory circuit 121) to the storage controller 110. In operation S244, the storage controller 110 may transmit the read command CMD_RD to the buffer memory 130. In operation S245, the buffer memory 130 may transmit the second device information DINF2 (i.e., device information stored in the buffer memory 130) to the storage controller 110 in response to the read command CMD_RD. In operation S246, the storage controller 110 may determine that the first device information DINF 1 and the second device information DINF2 are matched.

When the first device information DINF1 and the second device information DINF2 are not matched (for example, are different), in operation S247, the storage controller 110 may transmit the second command CMD_V2 and the second device information DINF2 to the nonvolatile memory device 120. In operation S248, the nonvolatile memory device 120 may reload the second device information DINF2 to the memory circuit 121. In an embodiment, the operation S242 to the operation S248 of FIG. 9 are similar to the operation S222 to the operation S228 of FIG. 7, and thus, additional description will be omitted to avoid redundancy.

After operation S248, in operation S249, the storage controller 110 and the nonvolatile memory device 120 may retry an operation the same as the previous failed operation. The operation S249 of FIG. 9 is similar to the operation S236 of FIG. 8, and thus, additional description will be omitted to avoid redundancy.

In an embodiment, when a determination result in operation S246 indicates that the first device information DINF1 and the second device information DINF2 are matched, the storage device 100 may perform any other recovery operation (e.g., an operation of changing an operation parameter, power-off, or a device reset). For example, that the first device information DINF1 and the second device information DINF2 are matched means that the first device information DINF 1 (i.e., device information provided from the memory circuit 121) does not include an error. That is, this means that the device failure or the EUCC of the nonvolatile memory device 120 is not caused by an error of the device information DINF. Accordingly, instead of reloading the device information DINF, the storage device 100 may perform any other recovery operation (e.g., an operation of changing an operation parameter, power-off, or a device reset).

As described above, the storage controller 110 according to an embodiment of the present disclosure may back and manage the device information DINF of the nonvolatile memory device 120 up to a separate memory (e.g., the buffer memory 130). Afterwards, the storage controller 110 may reload the device information DINF backed up to the buffer memory 130 to the nonvolatile memory device 120. In this case, the reliability of the device information DINF stored in the memory circuit 121 may be guaranteed. In an embodiment, the operation of reloading the device information stored in the buffer memory 130 to the memory circuit 121 of the nonvolatile memory device 120 (i.e., the recovery operation) may be performed periodically or randomly during the operation of the storage device 100 or may be performed when the device failure or the UECC occurs in the nonvolatile memory device 120.

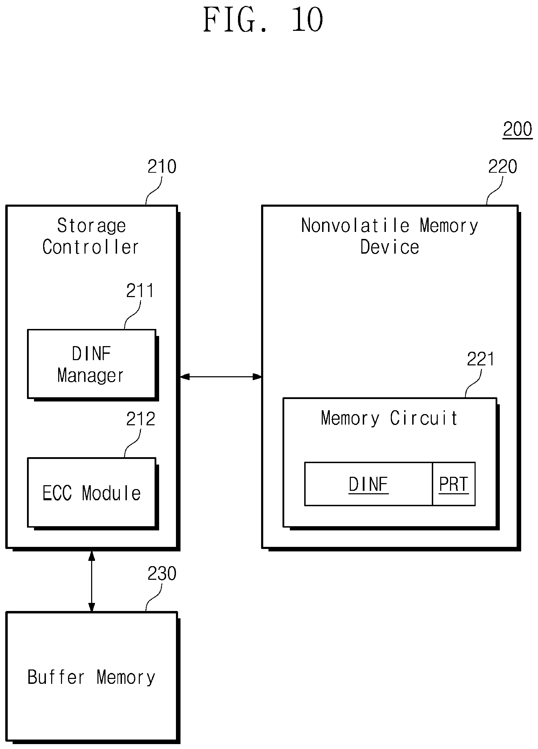

FIG. 10 is a block diagram illustrating a storage device according to an embodiment of the present disclosure. Referring to FIG. 10, a storage device 200 may include a storage controller 210, a nonvolatile memory device 220, and a buffer memory 230. Normal operations of the storage controller 210, the nonvolatile memory device 220, and the buffer memory 230 are described with reference to FIG. 1, and thus, additional description will be omitted to avoid redundancy.

In an embodiment, the nonvolatile memory device 220 may include a memory circuit 221. The memory circuit 221 may include the device information DINF. The nonvolatile memory device 220 may perform various operations based on the device information DINF stored in the memory circuit 221. The memory circuit 221 and the device information DINF are described above, and thus, additional description will be omitted to avoid redundancy.

In an embodiment, the storage controller 110 may include a device information manager 211 and an error correction code (ECC) module 212. The device information manager 211 may be configured to perform the recovery operation on the device information DINF stored in the memory circuit 221 of the nonvolatile memory device 220. For example, the ECC module 212 of the storage controller 110 may be configured to generate parity data by performing ECC encoding on data to be stored in the nonvolatile memory device 220 and to correct an error of data by performing ECC decoding on data and parity data read from the nonvolatile memory device 220.

The device information manager 211 may generate parity information PRT by performing ECC decoding on the device information DINF stored in the memory circuit 221 through the ECC module 212. The device information manager 211 may store the parity information PRT in the memory circuit 221 together with the device information DINF.

Afterwards, periodically or randomly, the device information manager 211 may correct an error of the device information DINF by reading the device information DINF and the parity information PRT from the memory circuit 221 and performing ECC decoding on the device information DINF and the parity information PRT. The device information manager 211 may reload the corrected device information DINF to the memory circuit 221.

As described above, the storage controller 210 may perform an error correction operation on the device information DINF of the memory circuit 221 by using the ECC module 212 that is used to correct an error of data stored in the nonvolatile memory device 220. In this case, a separate memory region (e.g., a buffer memory region) for backing up the device information DINF may not be required.

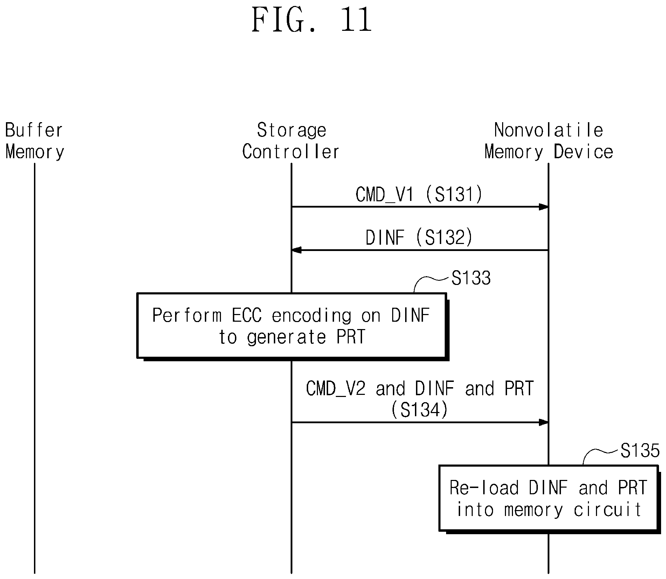

FIG. 11 is a flowchart illustrating an operation of a storage device of FIG. 10 according to example embodiments. Referring to FIGS. 10 and 11, in operation S131, the storage controller 210 may transmit the first command CMD_V1 to the nonvolatile memory device 220. In an embodiment, the first command CMD_V1 may be a command for reading the device information DINF stored in the memory circuit 221 of the nonvolatile memory device 220. In an embodiment, the first command CMD_V1 may be the "GET FEATURE" command. Alternatively, the first command CMD_V1 may include a vendor command or a combination of various other operation commands.

In operation S132, the nonvolatile memory device 220 may transmit the device information DINF to the storage controller 210. For example, in response to the first command CMD_V1, the nonvolatile memory device 220 may transmit the device information DINF stored in the memory circuit 221 to the storage controller 210.

In operation S133, the storage controller 210 may generate the parity information PRT by performing ECC encoding on the received device information DINF. For example, the storage controller 210 may perform ECC encoding on the device information DINF by using the ECC module 212. In an embodiment, the ECC module 212 may be a hardware device configured to correct an error of user data stored in the nonvolatile memory device 220. Alternatively, the ECC module 212 that performs ECC encoding/decoding on the device information DINF may be a device that is independent of a hardware device configured to correct an error of user data stored in the nonvolatile memory device 220.

In operation S134, the storage controller 210 may transmit the second command CMD_V2, the device information DINF, and the parity information PRT to the nonvolatile memory device 220. In an embodiment, the second command CMD_V2 may be a command for reloading the device information DINF and the parity information PRT to the memory circuit 221 of the nonvolatile memory device 220. In an embodiment, the second command CMD_V2 may be the set feature command "SET FEATURE". Alternatively, the second command CMD_V2 may include a vendor command or a combination of various other operation commands.

In operation S135, the nonvolatile memory device 220 may reload the device information DINF and the parity information PRT to the memory circuit 221. For example, the nonvolatile memory device 220 may reload the device information DINF and the parity information PRT to the memory circuit 221 in response to the second command CMD_V2.

In an embodiment, through the operations described with reference to FIG. 11, the device information DINF and the parity information PRT may be stored in the memory circuit 221 of the nonvolatile memory device 220. The operations described with reference to FIG. 11 may be performed in the initialization operation of the storage device 200. Alternatively, the operations described with reference to FIG. 11 may be performed periodically or randomly during the operation of the storage device 200.

In an embodiment, in the case where an encoding/decoding manner of the ECC module 212 of the storage controller 210 is defined in advance, the device information DINF and the parity information PRT stored in the memory circuit 221 of the nonvolatile memory device 220 may be set in the E-fuse manner without performing a separate encoding operation (i.e., the operation of FIG. 11).

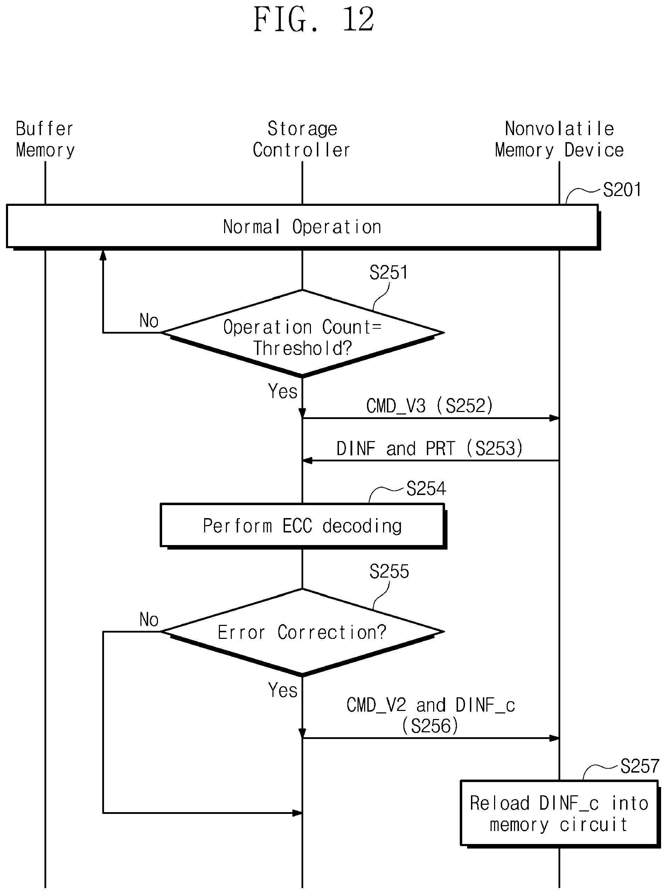

FIG. 12 is a flowchart illustrating an operation of a storage device of FIG. 10 according to example embodiments. For convenience of description, it is assumed that the memory circuit 221 of the nonvolatile memory device 220 stores the device information DINF and the parity information PRT.

Referring to FIGS. 10 and 12, in operation S201, the storage controller 210, the nonvolatile memory device 220, and the buffer memory 230 may perform normal operations. In operation S251, the storage controller 210 may determine whether an operation count of the nonvolatile memory device 220 reaches a threshold value. The operation S201 and the operation S251 of FIG. 12 are similar to the operation S201 and the operation S211 of FIG. 6, and thus, additional description will be omitted to avoid redundancy.

In operation S252, the storage controller 210 may transmit the third command CMD_V3 to the nonvolatile memory device 220. In an embodiment, the third command CMD_V3 may be a command for reading the device information DINF and the parity information PRT stored in the memory circuit 221 of the nonvolatile memory device 220. In an embodiment, the third command CMD_V3 may be the "GET FEATURE" command. Alternatively, the third command CMD_V3 may include a vendor command or a combination of various other operation commands.

In operation S253, the nonvolatile memory device 220 may provide the device information DINF and the parity information PRT to the storage controller 210. For example, the nonvolatile memory device 220 may provide the device information DINF and the parity information PRT stored in the memory circuit 221 to the storage controller 210 in response to the third command CMD_V3.

In operation S254, the storage controller 210 may perform ECC decoding on the device information DINF and the parity information PRT. For example, the storage controller 210 may perform ECC decoding on the device information DINF and the parity information PRT by using the ECC module 212.

In operation S255, the storage controller 210 may determine whether the error is corrected, based on an ECC decoding result. When the error is corrected, in operation S256, the storage controller 210 may transmit corrected device information DINF_c and the second command CMD_V2 to the nonvolatile memory device 220. In operation S257, the nonvolatile memory device 220 may reload the corrected device information DINF_c to the memory circuit 221 in response to the second command CMD_V2. In an embodiment, the corrected device information DINF_c and the relevant parity information PRT may be provided to the nonvolatile memory device 220 through operation S256, and the corrected device information DINF_c and the relevant parity information PRT may be reloaded to the memory circuit 221 through operation S257.

When the error is not corrected, the storage controller 210 may perform a separate recovery operation (e.g., an operation of changing an operation parameter, power-off, or a device reset).

As described above, according to an embodiment of the present disclosure, the storage controller 210 may correct and manage an error of the device information DINF stored in the memory circuit 221 of the nonvolatile memory device 220 by using the ECC module 212. In this case, as the reliability of the device information DINF of the memory circuit 221 is guaranteed, the reliability of the nonvolatile memory device 220 or the storage controller 210 including the nonvolatile memory device 220 is improved.

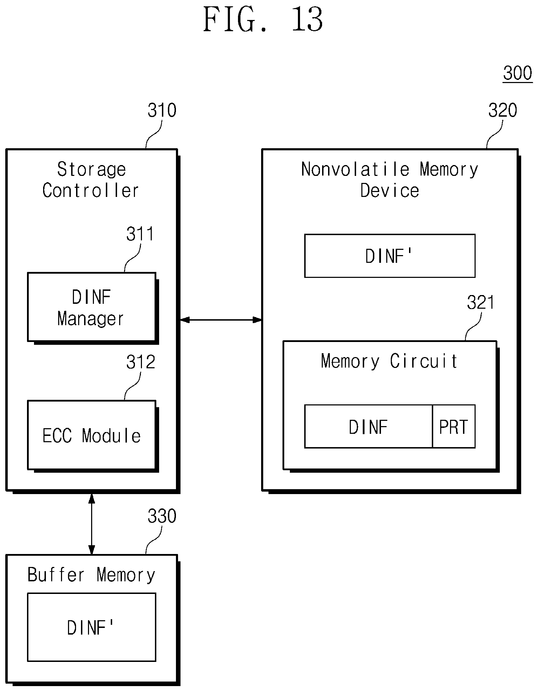

FIG. 13 is a block diagram illustrating a storage device according to an embodiment of the present disclosure. Referring to FIG. 13, a storage device 300 may include a storage controller 310, a nonvolatile memory device 320, and a buffer memory 330. Normal operations of the storage controller 310, the nonvolatile memory device 320, and the buffer memory 330 are described with reference to FIG. 1, and thus, additional description will be omitted to avoid redundancy.

In an embodiment, the nonvolatile memory device 320 may include a memory circuit 321. The memory circuit 321 may include the device information DINF and the parity information PRT. A device information manager 311 of the storage controller 310 may correct and manage an error of the device information DINF stored in the memory circuit 321 by using an ECC module 312. This is similar to that described with reference to FIG. 10 to FIG. 12, and thus, additional description will be omitted to avoid redundancy.

In an embodiment, the nonvolatile memory device 320 may store the device information DINF'. In this case, the device information DINF' may be stored in a memory cell array configured to store user data. The device information manager 311 may back the device information DINF' stored in the nonvolatile memory device 320 up to the buffer memory 330. In an embodiment, when ECC decoding of the device information DINF and the parity information PRT provided from the memory circuit 321 fails, the storage controller 310 may reload the device information DINF' stored in the buffer memory 330 to the memory circuit 321 of the nonvolatile memory device 320. In this case, the reliability of the device information DINF of the memory circuit 321 may be guaranteed.

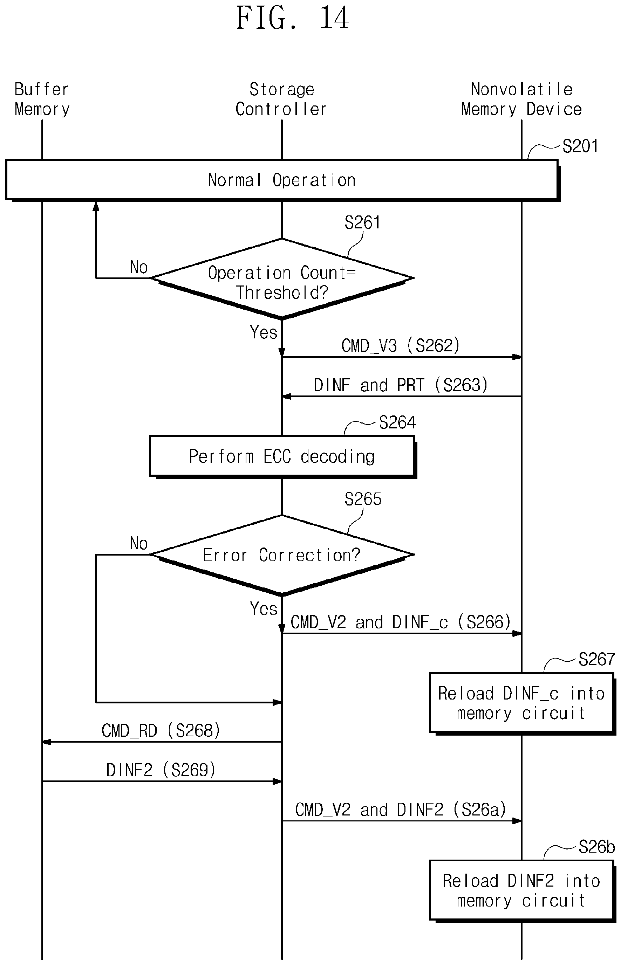

FIG. 14 is a flowchart illustrating an operation of a storage device of FIG. 13 according to example embodiments. For convenience of description, it is assumed that the memory circuit 321 of the nonvolatile memory device 320 stores the device information DINF and the relevant parity information PRT and the buffer memory 330 stores the device information DINF'. This may be performed through the backup operation of the device information DINF or the initialization operation of the storage device 300. The backup operation or the initialization operation is described above, and thus, additional description will be omitted to avoid redundancy.

Referring to FIGS. 13 and 14, in operation S201, the storage controller 310, the nonvolatile memory device 320, and the buffer memory 330 may perform normal operations. In operation S261, the storage controller 310 may determine whether an operation count of the nonvolatile memory device 320 reaches a threshold value. In operation S262, the storage controller 310 may transmit the third command CMD_V3 to the nonvolatile memory device 320. In operation S263, the nonvolatile memory device 320 may provide the device information DINF and the parity information PRT to the storage controller 310. In operation S264, the storage controller 310 may perform ECC decoding on the device information DINF and the parity information PRT. In operation S265, the storage controller 310 may determine whether the error is corrected, based on an ECC decoding result. When the error is corrected (e.g. error correction = yes), in operation S266, the storage controller 310 may transmit the corrected device information DINF_c and the second command CMD_V2 to the nonvolatile memory device 320. In operation S267, the nonvolatile memory device 320 may reload the corrected device information DINF _c to the memory circuit 321 in response to the second command CMD_V2. The operation S201 and the operation S261 to the operation S267 of FIG. 14 are similar to the operation S201 and the operation S251 to the operation S257 of FIG. 12, and thus, additional description will be omitted to avoid redundancy.

When a determination result in operation S265 indicates that the error is not corrected (e.g. error correction = no), in operation S268, the storage controller 310 may transmit the read command CMD_RD to the buffer memory 330. In operation S269, the buffer memory 330 may transmit the second device information DINF2 (i.e., device information DINF' stored in the buffer memory 330) to the storage controller 310 in response to the read command CMD_RD. In operation S26a, the storage controller 310 may transmit the second command CMD_V2 and the second device information DINF2 (i.e., device information DINF' provided from the buffer memory 330) to the nonvolatile memory device 320. In operation S26b, the nonvolatile memory device 320 may reload the second device information DINF2 to the memory circuit 321 in response to the second command CMD_V2. The operations S268, S269, S26a, and S26b of FIG. 14 are similar to the operations S212, S213, S214, and S215 of FIG. 6, and thus, additional description will be omitted to avoid redundancy.

In an embodiment, the storage controller 310 may generate the parity information PRT by performing ECC encoding on the second device information DINF2n (i.e., DINF'). Through operation S26a and operation S26b, the storage controller 310 and the nonvolatile memory device 320 may reload the parity information PRT to the memory circuit 321 together with the second device information DINF2.

In the embodiments described with reference to FIGS. 12 and 14, the storage controller 210 or 310 performs the recovery operation on the device information DINF, based on whether the operation count of the nonvolatile memory device 220 or 320 reaches the threshold value. However, the present disclosure is not limited thereto. For example, when the device failure or the UECC occurs in the nonvolatile memory device 220 or 320, the storage controller 210 or 310 may perform the recovery operation on the device information DINF based on the operation method similar to that described with reference to FIG. 12 or 14.

As described above, according to embodiments of the present disclosure, a storage controller may back device information of a nonvolatile memory device up to a separate memory (e.g., a buffer memory) and may perform the recovery operation on the device information of the nonvolatile memory device based on the backed-up device information. Alternatively, as the storage controller performs an error correction operation on the device information of the nonvolatile memory device, an error of the device information may be corrected. Accordingly, the reliability of the device information of the nonvolatile memory device may be guaranteed. In this case, even though the device failure or the UECC occurs in the nonvolatile memory device, the nonvolatile memory device may perform a normal operation without a separate device reset or power-off.

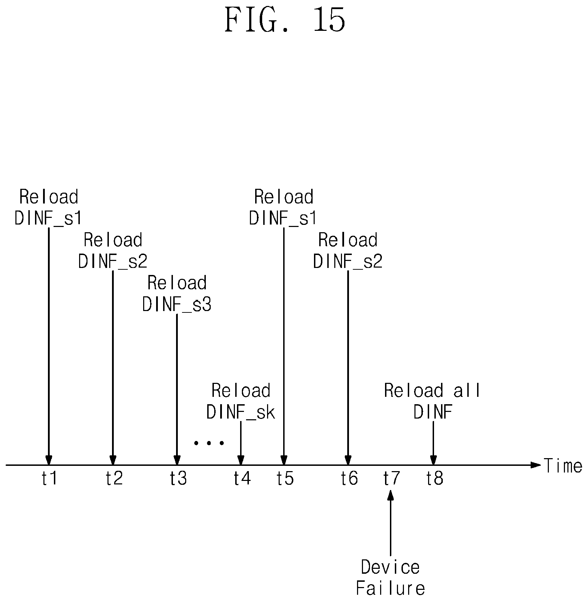

FIG. 15 is a timing diagram for describing an operation of a storage device of FIG. 1 according to example embodiments. In the above embodiments, the description is given as the device information DINF is one data unit (i.e., is reloaded to a memory circuit through one recovery operation). However, the present disclosure is not limited thereto.

Referring to FIGS. 1 and 15, the device information DINF of the nonvolatile memory device 120 may be divided into a plurality of sub-device information DINF_s1 to DINF_sk. The storage controller 110 may perform the recovery operation on the device information DINF by using the plurality of sub-device information DINF_s1 to DINF_sk. In an embodiment, each of the plurality of sub-device information DINF_s1 to DINF_sk may have a given unit. The given unit may correspond to a data size writable in the memory circuit 121 through one operation. Alternatively, the given unit may correspond to an ECC encoding/decoding unit of an ECC module (refer to FIGS. 10 and 13).

For example, as illustrated in FIG. 15, at a first time point t1, the storage controller 110 may perform the recovery operation on the first sub-device information DINF_s1. For example, the recovery operation of the first sub-device information DINF_s1 may include reloading information corresponding to the first sub-device information DINF_s1 from among the device information DINF stored in the buffer memory 130 to the memory circuit 121 or performing the error correction operation on the first sub-device information DINF_s1 among the device information DINF stored in the memory circuit 121 (refer to FIGS. 10 to 14).

Afterwards, at a second time point t2, the storage controller 110 may perform the recovery operation on the second sub-device information DINF_s2. Likewise, at third to fourth time points t3 to t4, the storage controller 110 may perform the recovery operations on the third to k-th (k is a positive integer) sub-device information DINF_s3 to DINF_sk, respectively. The recovery operation of each sub-device information is similar to the recovery operation of the first sub-device information DINF_s1 described above, and thus, additional description will be omitted to avoid redundancy.

As described above, the storage controller 110 may repeatedly perform the recovery operation on the device information DINF in units of sub-device information. In this case, because the recovery operation is performed on the device information DINF in a relatively small unit, the reduction of performance of the storage device 100 due to the recovery operation may be prevented. In an embodiment, the recovery operation of the sub-device information may be performed in a given period unit. Alternatively, the recovery operation of the sub-device information may be performed together with a reliability operation (e.g., a patrol read operation or a random interval neighbor check (RINC) operation) of the nonvolatile memory device 120.

In an embodiment, after all the recovery operations of the first to k-th sub-device information DINF_s1 to DINF _sk are completed, at a fifth time t5, the storage controller 110 may perform the recovery operation on the first sub-device information DINF_s1. Afterwards, at a sixth time t6, the storage controller 110 may perform the recovery operation on the second sub-device information DINF_s2. Afterwards, at a seventh time t7, the device failure may occur in the nonvolatile memory device 120. In this case, at an eighth time t8, the storage controller 110 may perform the recovery operation on the entire device information DINF of the nonvolatile memory device 120. In this case, as the recovery operation is performed on the entire device information DINF, an error of the device information DINF stored in the memory circuit 121 of the nonvolatile memory device 120 (caused, for example, by the device failure) may be removed, and the nonvolatile memory device 120 may operate normally.

As described above, the storage controller 110 may repeatedly perform the recovery operation on the device information DINF of the nonvolatile memory device 120 in units of sub-device information. In this case, through the repetitive recovery operation, the reliability of the device information DINF stored in the memory circuit 121 of the nonvolatile memory device 120 may be maintained, and the reduction of performance of the recovery operation may be prevented.

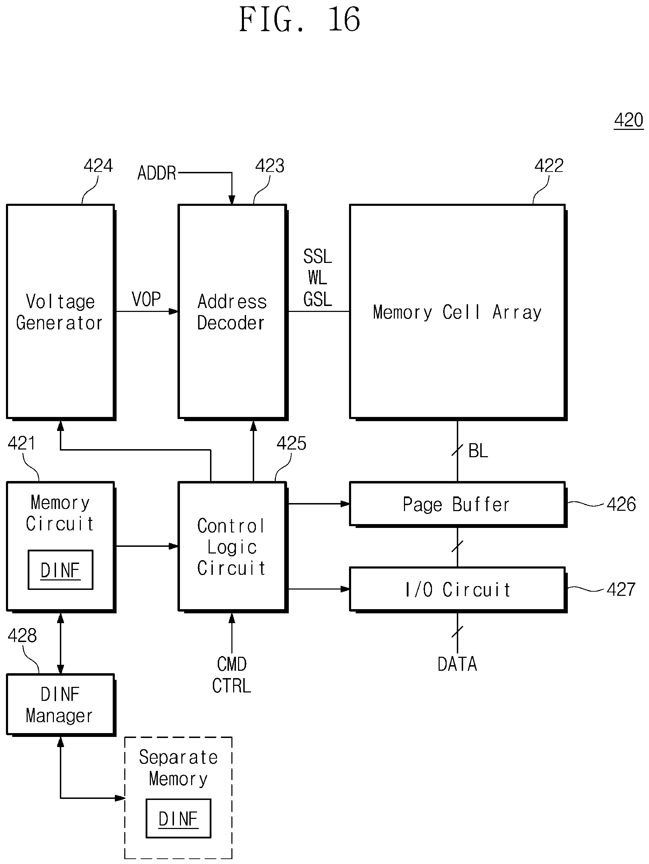

FIG. 16 is a block diagram illustrating a nonvolatile memory device according to an embodiment of the present disclosure. Referring to FIG. 16, a nonvolatile memory device 420 may include a memory circuit 421, a memory cell array 422, an address decoder 423, a voltage generator 424, a control logic circuit 425, a page buffer circuit 426, an input/output circuit 427, and a device information manager 428. The memory circuit 421, the memory cell array 422, the address decoder 423, the voltage generator 424, the control logic circuit 425, the page buffer circuit 426, and the input/output circuit 427 are described with reference to FIG. 2, and thus, additional description will be omitted to avoid redundancy.

In the above embodiments, the description is given as the recovery operation of the device information DINF of a nonvolatile memory device is performed by a storage controller. However, the present disclosure is not limited thereto. For example, as illustrated in FIG. 16, the nonvolatile memory device 420 may further include the device information manager 428. The device information manager 428 may perform the recovery operation on the device information DINF stored in the memory circuit 421 based on the device information DINF stored in a separate memory. In detail, the device information manager 428 may repeatedly perform the recovery operation on all or part of the device information DINF of the memory circuit 421 based on the device information DINF stored in the separate memory. In this case, the reliability of the device information DINF stored in the memory circuit 421 may be maintained.

In an embodiment, the separate memory may refer to an additional memory circuit included in the nonvolatile memory device 420. Alternatively, the separate memory may refer to a memory (e.g., a buffer memory) placed outside the nonvolatile memory device 420.

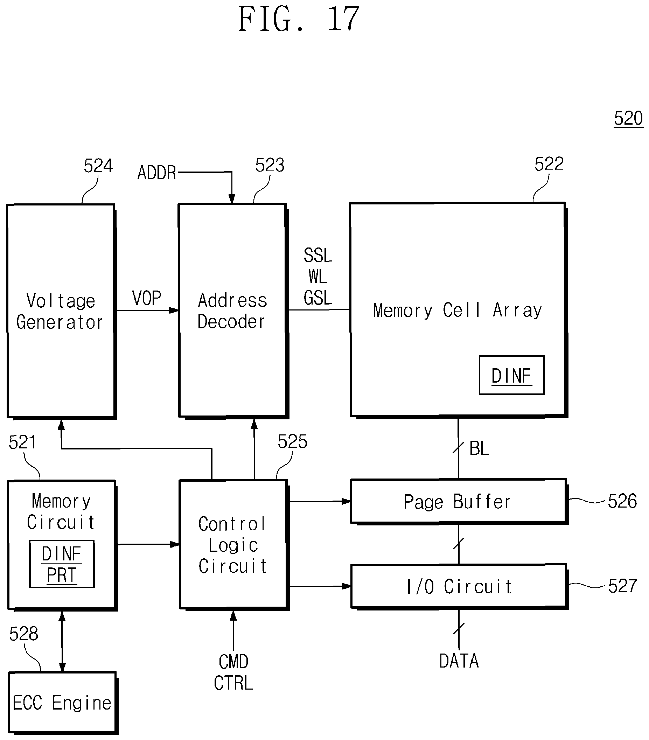

FIG. 17 is a block diagram illustrating a nonvolatile memory device according to an embodiment of the present disclosure. Referring to FIG. 17, a nonvolatile memory device 520 may include a memory circuit 521, a memory cell array 522, an address decoder 523, a voltage generator 524, a control logic circuit 525, a page buffer circuit 526, an input/output circuit 527, and an ECC engine 528. The memory circuit 521, the memory cell array 522, the address decoder 523, the voltage generator 524, the control logic circuit 525, the page buffer circuit 526, and the input/output circuit 527 are described with reference to FIG. 2, and thus, additional description will be omitted to avoid redundancy.

In the above embodiments, the description is given as the recovery operation of the device information DINF of a nonvolatile memory device is performed by a storage controller. However, the present disclosure is not limited thereto. For example, as illustrated in FIG. 17, the nonvolatile memory device 520 may further include the ECC engine 528. The ECC engine 528 may generate the parity information PRT of the device information DINF stored in the memory circuit 521. The generated parity information PRT may be stored in the memory circuit 521. Afterwards, the ECC engine 528 may be configured to correct an error of the device information DINF based on the device information DINF and the parity information PRT. In this case, the reliability of the device information DINF stored in the memory circuit 521 may be maintained.

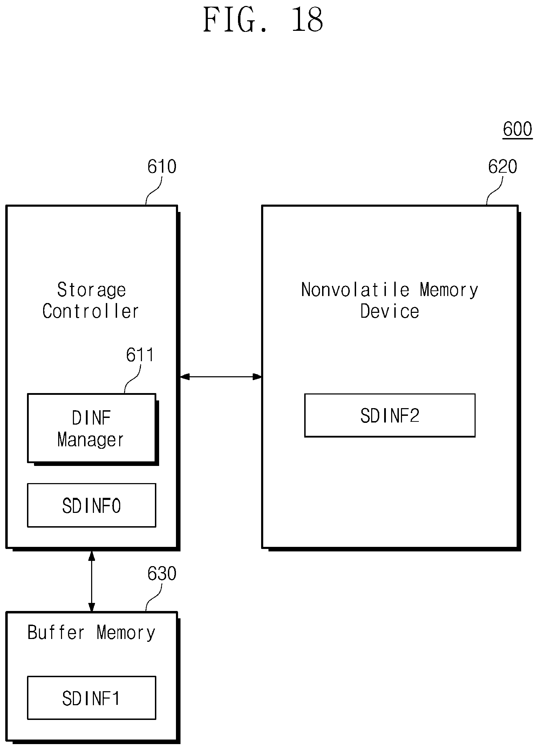

FIG. 18 is a block diagram illustrating a storage device according to an embodiment of the present disclosure. Referring to FIG. 18, a storage device 600 may include a storage controller 610, a nonvolatile memory device 620, and a buffer memory 630. Basic operations of the storage controller 610, the nonvolatile memory device 620, and the buffer memory 630 are described with reference to FIG. 1, and thus, additional description will be omitted to avoid redundancy.

The above embodiments are associated with a way to maintain the reliability of the device information DINF of a nonvolatile memory device. However, the present disclosure is not limited thereto. For example, the storage controller 610 may include storage controller information (SDINFO). The storage controller information SDINFO may include a variety of information necessary for the storage controller 610 to operate. When an error may occur in the storage controller information SDINFO due to various factors, the storage controller 610 may fail to operate normally. Accordingly, to prevent an error of the storage controller information SDINFO, the storage controller information SDINFO may be backed up to the buffer memory 630 or the nonvolatile memory device 620 as storage controller information SDINF1 or SDINF2, and the recovery operation may be performed based on the storage controller information SDINF1 or SDINF2 stored in the buffer memory 630 or the nonvolatile memory device 620. In an embodiment, the actual recovery operation is similar to that described above except that targets of the recovery operation are different, and thus, additional description will be omitted to avoid redundancy.

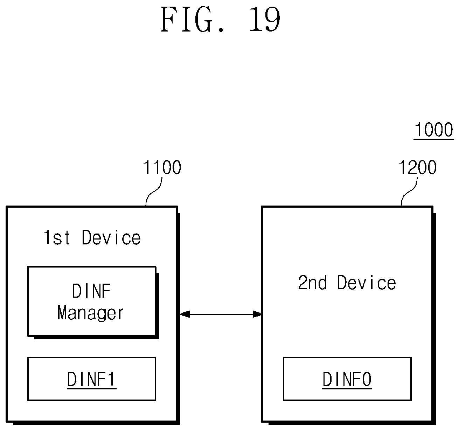

FIG. 19 is a block diagram illustrating an electronic device according to an embodiment of the present disclosure. Referring to FIG. 19, an electronic device 1000 may include a first device 1100 and a second device 1200. The first and second devices 1100 and 1200 may exchange various signals. For example, each of the first device 1100 and the second device 1200 may include an electronic device, which is configured to perform various operations, such as a CPU, a GPU, an ALU, a controller, a microprocessor, a memory device, or a display device. In an embodiment, the second device 1200 may include device information DINF0, and the second device 1200 may operate based on the device information DINF0. The first device 1100 may be configured to back up the device information DINF0 of the second device 1200 as device information DINF1 and may be configured to perform various recovery operations on the device information DINF0 of the second device 1200.

For example, in the embodiments described with reference to FIGS. 1 to 18, the description is given as the device information DINF is associated with a nonvolatile memory device, but the present disclosure is not limited thereto. For example, the device information DINF may be used in various electronic devices, and various recovery operations may be performed on the device information DINF based on a method similar to the method described with reference to FIGS. 1 to 18.

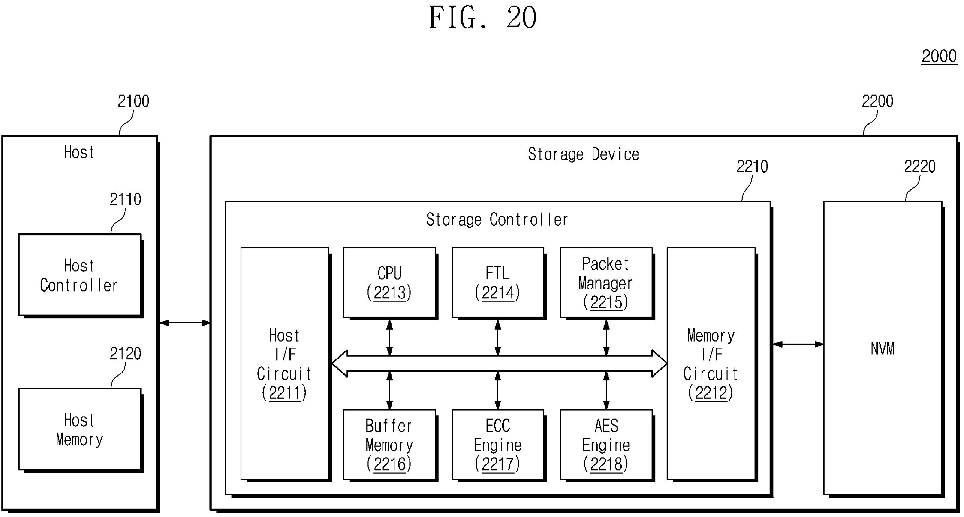

FIG. 20 is a block diagram of a host storage system according to an example embodiment.

The host storage system 2000 may include a host 2100 and a storage device 2200. Further, the storage device 2200 may include a storage controller 2210 and an NVM 2220. According to an example embodiment, the host 2100 may include a host controller 2110 and a host memory 2120. The host memory 2120 may serve as a buffer memory configured to temporarily store data to be transmitted to the storage device 2200 or data received from the storage device 2200.

The storage device 2200 may include storage media configured to store data in response to requests from the host 2100. As an example, the storage device 2200 may include at least one of an SSD, an embedded memory, and a removable external memory. When the storage device 2200 is an SSD, the storage device 2200 may be a device that conforms to the nonvolatile memory express (NVMe) standard. When the storage device 2200 is an embedded memory or an external memory, the storage device 2200 may be a device that conforms to a UFS standard or an eMMC standard. Each of the host 2100 and the storage device 2200 may generate a packet according to an adopted standard protocol and transmit the packet.

When the NVM 2220 of the storage device 2200 includes a flash memory, the flash memory may include a 2D NAND memory array or a 3D (or vertical) NAND (VNAND) memory array. As another example, the storage device 2200 may include various other kinds of NVMs. For example, the storage device 2200 may include magnetic RAM (MRAM), spin-transfer torque MRAM, conductive bridging RAM (CBRAM), ferroelectric RAM (FRAM), PRAM, RRAM, and various other kinds of memories.

According to an embodiment, the host controller 2110 and the host memory 2120 may be implemented as separate semiconductor chips. Alternatively, in some embodiments, the host controller 2110 and the host memory 2120 may be integrated in the same semiconductor chip. As an example, the host controller 2110 may be any one of a plurality of modules included in an application processor (AP). The AP may be implemented as a System on Chip (SoC). Further, the host memory 2120 may be an embedded memory included in the AP or an NVM or memory module located outside the AP.

The host controller 2110 may manage an operation of storing data (e.g., write data) of a buffer region of the host memory 2120 in the NVM 2220 or an operation of storing data (e.g., read data) of the NVM 2220 in the buffer region.

The storage controller 2210 may include a host interface 2211, a memory interface 2212, and a CPU 2213. Further, the storage controllers 2210 may further include a flash translation layer (FTL) 2214, a packet manager 2215, a buffer memory 2216, an error correction code (ECC) engine 2217, and an advanced encryption standard (AES) engine 2218. The storage controllers 2210 may further include a working memory (not shown) in which the FTL 2214 is loaded. The CPU 2213 may execute the FTL 2214 to control data write and read operations on the NVM 2220.

The host interface 2211 may transmit and receive packets to and from the host 2100. A packet transmitted from the host 2100 to the host interface 2211 may include a command or data to be written to the NVM 2220. A packet transmitted from the host interface 2211 to the host 2100 may include a response to the command or data read from the NVM 2220. The memory interface 2212 may transmit data to be written to the NVM 2220 to the NVM 2220 or receive data read from the NVM 2220. The memory interface 2212 may be configured to comply with a standard protocol, such as Toggle or open NAND flash interface (ONFI).

The FTL 2214 may perform various functions, such as an address mapping operation, a wear-leveling operation, and a garbage collection operation. The address mapping operation may be an operation of converting a logical address received from the host 2100 into a physical address used to actually store data in the NVM 2220. The wear-leveling operation may be a technique for preventing excessive deterioration of a specific block by allowing blocks of the NVM 2220 to be uniformly used. As an example, the wear-leveling operation may be implemented using a firmware technique that balances erase counts of physical blocks. The garbage collection operation may be a technique for ensuring usable capacity in the NVM 2220 by erasing an existing block after copying valid data of the existing block to a new block.

The packet manager 2215 may generate a packet according to a protocol of an interface, which consents to the host 2100, or parse various types of information from the packet received from the host 2100. In addition, the buffer memory 2216 may temporarily store data to be written to the NVM 2220 or data to be read from the NVM 2220. Although the buffer memory 2216 may be a component included in the storage controllers 2210, the buffer memory 2216 may be outside the storage controllers 2210.

The ECC engine 2217 may perform error detection and correction operations on read data read from the NVM 2220. More specifically, the ECC engine 2217 may generate parity bits for write data to be written to the NVM 2220, and the generated parity bits may be stored in the NVM 2220 together with write data. During the reading of data from the NVM 2220, the ECC engine 2217 may correct an error in the read data by using the parity bits read from the NVM 2220 along with the read data, and output error-corrected read data.

The AES engine 2218 may perform at least one of an encryption operation and a decryption operation on data input to the storage controllers 2210 by using a symmetric-key algorithm.

In an embodiment, the NVM 2220 may operate based on the device information DINF, and the buffer memory 2216 of the storage controller 2210 may be configured to back up the device information DINF. In this case, the storage controller 2210 may perform the recovery operation on the device information DINF of the NVM 2220 based on the device information DINF of the buffer memory 2216. In an embodiment, the storage controller 2210 may perform the recovery operation on the device information DINF of the nonvolatile memory 2220 by using the ECC engine 2217. Various recovery operations of the device information DINF of the nonvolatile memory 2220 are described with reference to FIGS. 1 to 19, and thus, additional description will be omitted to avoid redundancy.

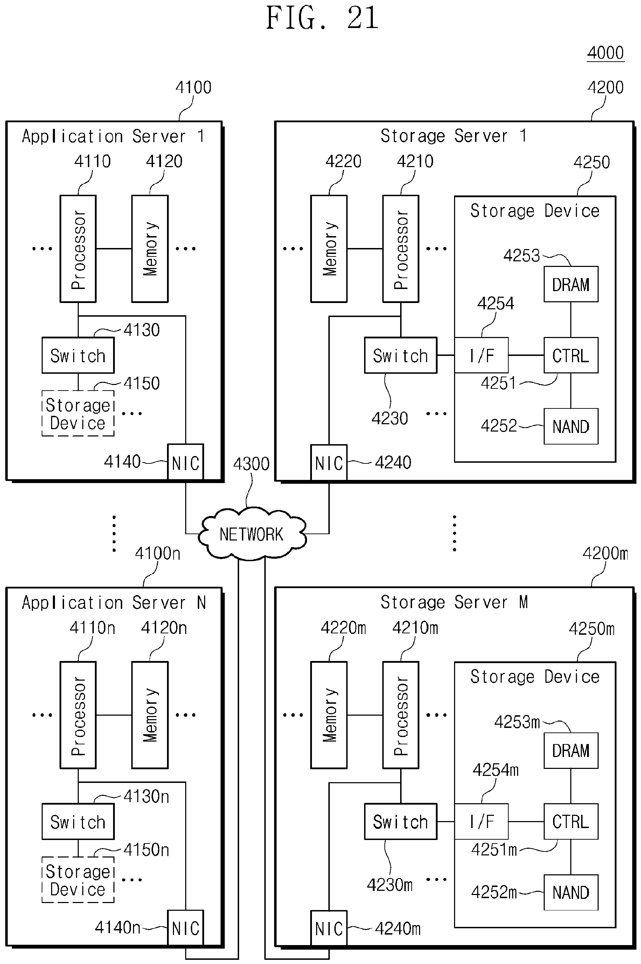

FIG. 21 is a diagram of a data center to which a memory device is applied, according to an embodiment.

Referring to FIG. 21, the data center 4000 may be a facility that collects various types of pieces of data and provides services and be referred to as a data storage center. The data center 4000 may be a system for operating a search engine and a database, and may be a computing system used by companies, such as banks, or government agencies. The data center 4000 may include application servers 4100 to 4100n and storage servers 4200 to 4200m. The number of application servers 4100 to 4100n and the number of storage servers 4200 to 4200m may be variously selected according to embodiments. The number of application servers 4100 to 4100n may be different from the number of storage servers 4200 to 4200m.

The application server 4100 or the storage server 4200 may include at least one of processors 4110 and 4210 and memories 4120 and 4220. The storage server 4200 will now be described as an example. The processor 4210 may control all operations of the storage server 4200, access the memory 4220, and execute instructions and/or data loaded in the memory 4220. The memory 4220 may be a double-data-rate synchronous DRAM (DDR SDRAM), a high-bandwidth memory (HBM), a hybrid memory cube (HMC), a dual in-line memory module (DIMM), Optane DIMM, and/or a nonvolatile memory DIMM (NVMDIMM). In some embodiments, the numbers of processors 4210 and memories 4220 included in the storage server 4200 may be variously selected. In an embodiment, the processor 4210 and the memory 4220 may provide a processor-memory pair. In an embodiment, the number of processors 4210 may be different from the number of memories 4220. The processor 4210 may include a single-core processor or a multicore processor. The above description of the storage server 4200 may be similarly applied to the application server 4100. In some embodiments, the application server 4100 may not include a storage device 4150. The storage server 4200 may include at least one storage device 4250. The number of storage devices 4250 included in the storage server 4200 may be variously selected according to embodiments.

The application servers 4100 to 4100n may communicate with the storage servers 4200 to 4200m through a network 4300. The network 4300 may be implemented by using a fiber channel (FC) or Ethernet. In this case, the FC may be a medium used for relatively high-speed data transmission and use an optical switch with high performance and high availability. The storage servers 4200 to 4200m may be provided as file storages, block storages, or object storages according to an access method of the network 4300.

In an embodiment, the network 4300 may be a storage-dedicated network, such as a storage area network (SAN). For example, the SAN may be an FC-SAN, which uses an FC network and is implemented according to an FC protocol (FCP). As another example, the SAN may be an Internet protocol (IP)-SAN, which uses a transmission control protocol (TCP)/IP network and is implemented according to a SCSI over TCP/IP or Internet SCSI (iSCSI) protocol. In another embodiment, the network 4300 may be a general network, such as a TCP/IP network. For example, the network 4300 may be implemented according to a protocol, such as FC over Ethernet (FCoE), network attached storage (NAS), and NVMe over Fabrics (NVMe-oF).

Hereinafter, the application server 4100 and the storage server 4200 will mainly be described. A description of the application server 4100 may be applied to another application server 4100n, and a description of the storage server 4200 may be applied to another storage server 4200m.

The application server 4100 may store data, which is requested by a user or a client to be stored, in one of the storage servers 4200 to 4200m through the network 4300. Also, the application server 4100 may obtain data, which is requested by the user or the client to be read, from one of the storage servers 4200 to 4200m through the network 4300. For example, the application server 4100 may be implemented as a web server or a database management system (DBMS).

The application server 4100 may access a memory 4120n or a storage device 4150n, which is included in another application server 4100n, through the network 4300. Alternatively, the application server 4100 may access memories 4220 to 4220m or storage devices 4250 to 4250m, which are included in the storage servers 4200 to 4200m, through the network 4300. Thus, the application server 4100 may perform various operations on data stored in application servers 4100 to 4100n and/or the storage servers 4200 to 4200m. For example, the application server 4100 may execute an instruction for moving or copying data between the application servers 4100 to 4100n and/or the storage servers 4200 to 4200m. In this case, the data may be moved from the storage devices 4250 to 4250m of the storage servers 4200 to 4200m to the memories 4120 to 4120n of the application servers 4100 to 4100n directly or through the memories 4220 to 4220m of the storage servers 4200 to 4200m. The data moved through the network 4300 may be data encrypted for security or privacy.

The storage server 4200 will now be described as an example. An interface 4254 may provide physical connection between a processor 4210 and a controller 4251 and a physical connection between a network interface card (NIC) 4240 and the controller 4251. For example, the interface 4254 may be implemented using a direct attached storage (DAS) scheme in which the storage device 4250 is directly connected with a dedicated cable. For example, the interface 4254 may be implemented by using various interface schemes, such as ATA, SATA, e-SATA, an SCSI, SAS, PCI, PCIe, NVMe, IEEE 1394, a USB interface, an SD card interface, an MMC interface, an eMMC interface, a UFS interface, an eUFS interface, and/or a CF card interface.

The storage server 4200 may further include a switch 4230 and the NIC (Network InterConnect) 4240. The switch 4230 may selectively connect the processor 4210 to the storage device 4250 or selectively connect the NIC 4240 to the storage device 4250 via the control of the processor 4210.

In an embodiment, the NIC 4240 may include a network interface card and a network adaptor. The NIC 4240 may be connected to the network 4300 by a wired interface, a wireless interface, a Bluetooth interface, or an optical interface. The NIC 4240 may include an internal memory, a digital signal processor (DSP), and a host bus interface and be connected to the processor 4210 and/or the switch 4230 through the host bus interface. The host bus interface may be implemented as one of the above-described examples of the interface 4254. In an embodiment, the NIC 4240 may be integrated with at least one of the processor 4210, the switch 4230, and the storage device 4250.

In the storage servers 4200 to 4200m or the application servers 4100 to 4100n, a processor may transmit a command to storage devices 4150 to 4150n and 4250 to 4250m or the memories 4120 to 4120n and 4220 to 4220m and program or read data. In this case, the data may be data of which an error is corrected by an ECC engine. The data may be data on which a data bus inversion (DBI) operation or a data masking (DM) operation is performed, and may include cyclic redundancy code (CRC) information. The data may be data encrypted for security or privacy.

Storage devices 4150 to 4150n and 4250 to 4250m may transmit a control signal and a command/address signal to NAND flash memory devices 4252 to 4252m in response to a read command received from the processor. Thus, when data is read from the NAND flash memory devices 4252 to 4252m, a read enable (RE) signal may be input as a data output control signal, and thus, the data may be output to a DQ bus. A data strobe signal DQS may be generated using the RE signal. The command and the address signal may be latched in a page buffer depending on a rising edge or falling edge of a write enable (WE) signal.

The controller 4251 may control all operations of the storage device 4250. In an embodiment, the controller 4251 may include SRAM. The controller 4251 may write data to the NAND flash memory device 4252 in response to a write command or read data from the NAND flash memory device 4252 in response to a read command. For example, the write command and/or the read command may be provided from the processor 4210 of the storage server 4200, the processor 4210m of another storage server 4200m, or the processors 4110 and 4110n of the application servers 4100 and 4100n. DRAM 4253 may temporarily store (or buffer) data to be written to the NAND flash memory device 4252 or data read from the NAND flash memory device 4252. Also, the DRAM 4253 may store metadata. Here, the metadata may be user data or data generated by the controller 4251 to manage the NAND flash memory device 4252. The storage device 4250 may include a secure element (SE) for security or privacy.

In an embodiment, each of the storage devices 4150 to 4150n and 4250 to 4250m included in the application servers 4100 to 4100n and the storage servers 4200 to 4200m may be the storage device described with reference to FIGS. 1 to 19. That is, each of the NAND flash memory devices 4252 to 4252m respectively included in the storage devices 4150 to 4150n and 4250 to 4250m may operate based on the device information DINF, and the device information DINF may be backed up or recovered by the corresponding controllers 4251 to 4251m. Various recovery operations of the device information DINF are described with reference to FIGS. 1 to 19, and thus, additional description will be omitted to avoid redundancy. In an embodiment, when the device information DINF of each of the NAND flash memory devices 4252 to 4252m respectively included in the storage devices 4150 to 4150n and 4250 to 4250m is recovered as described with reference to FIGS. 1 to 19, without the reset operation of the storage devices 4150 to 4150n and 4250 to 4250m, normal operations of the storage devices 4150 to 4150n and 4250 to 4250m or the NAND flash memory devices 4252 to 4252m may be guaranteed. This is more useful in an environment of the data center 4000 that is not powered off periodically or randomly.

According to the present disclosure, an operation method of a storage controller with improved reliability, a storage system, and an operation method of the storage system are provided. While the present disclosure has been described with reference to embodiments thereof, it will be apparent to those of ordinary skill in the art that various changes and modifications may be made thereto without departing from the scope of the present disclosure as set forth in the following claims.

## Claims

1. A storage device comprising:
a nonvolatile memory device including a memory circuit configured to store first device information, the nonvolatile memory device configured to operate based on the first device information;
a storage controller configured to control the nonvolatile memory device; and
a buffer memory configured to store map data managed by the storage controller and to store second device information being a backup of the first device information,
wherein the first device information includes information about an operation parameter and an operation frequency of the nonvolatile memory device, and
wherein the storage controller is further configured to perform a recovery operation on the first device information stored in the memory circuit of the nonvolatile memory device, based on the second device information stored in the buffer memory.

2. The storage device of claim 1, wherein the memory circuit includes a plurality of latch circuits configured to store the first device information based on an E-fuse manner.

3. The storage device of claim 1 or 2, wherein the storage controller is configured to perform the recovery operation based on a set feature command, a vendor command, or a combination of at least one operation command.

4. The storage device of any preceding claim, wherein the storage controller is configured to perform the recovery operation on the first device information stored in the memory circuit whenever an operation count of the nonvolatile memory device reaches a threshold value.

5. The storage device of claim 4, wherein the first device information stored in the memory circuit includes a plurality of sub-device information, and
wherein the storage controller is further configured to perform the recovery operation in units of the plurality of sub-device information.

6. The storage device of any preceding claim, wherein, when a device failure occurs in the nonvolatile memory device, the storage device is configured such that the storage controller performs the recovery operation on the first device information stored in the memory circuit.

7. The storage device of claim 6, wherein, after the recovery operation of the first device information stored in the memory circuit is completed, the storage device is configured such that the storage controller retries a previous failed operation in the nonvolatile memory device.

8. The storage device of any preceding claim, wherein the storage controller is configured to perform the recovery operation on the first device information stored in the memory circuit without a device reset or power-off of the nonvolatile memory device.

9. The storage device of any preceding claim, wherein the first device information further includes information about a capacity, a vendor identifier, or a device model of the nonvolatile memory device.

10. The storage device of any preceding claim, wherein, in an initialization operation of the storage device, the storage controller is further configured to:
read third device information being a backup of the first device information from a memory cell array of the nonvolatile memory device, and
store the third device information in the buffer memory as the second device information.

11. The storage device of any preceding claim, wherein, in an initialization operation of the storage device, the storage controller is further configured to:
read the first device information from the memory circuit of the nonvolatile memory device, and
store the first device information in the buffer memory as the second device information.

12. The storage device of claim 11, wherein the storage controller is further configured to read the first device information from the memory circuit, based on a set feature command, a vendor command, or a combination of at least one operation command.

13. The storage device of any preceding claim, wherein, when the first device information read from the memory circuit is different from the second device information stored in the buffer memory, the storage device is configured such that the storage controller performs the recovery operation by reading the first device information stored in the memory circuit and reloading the second device information stored in the buffer memory to the memory circuit.

14. The storage device of any preceding claim, wherein the nonvolatile memory device further includes:
a memory cell array including a plurality of memory cells;
an address decoder connected to the memory cell array through a plurality of word lines, and configured to drive the plurality of word lines based on an address received from the storage controller;
a page buffer circuit connected to the memory cell array through a plurality of bit lines;
an input/output circuit configured to exchange data with the storage controller;
a voltage generator configured to generate a plurality of operation voltages; and
a control logic circuit configured to control the address decoder, the page buffer circuit, and the voltage generator in response to a command received from the storage controller.

15. The storage device of claim 14, wherein the control logic circuit is configured to control the address decoder, the page buffer circuit, the input/output circuit, and the voltage generator based on the first device information stored in the memory circuit.
